# EUROPEAN PATENT SPECIFICATION

(11) **EP 3 136 777 B1**
(45) Date of publication and mention of the grant of the patent: **24.07.2019**
(21) Application number: 14889864.6
(22) Date of filing: 21.04.2014
(51) Int. Cl.: H04W 24/10

(54) **DETERMINING REASON FOR KPI DECREASE**
BESTIMMUNG DER URSACHE DER KPI-MINDERUNG
DÉTERMINATION DE RAISON DE DESCENTE DE KPI

(43) Date of publication of application: 01.03.2017
(73) Proprietor: Huawei Technologies Co., Ltd., Longgang District Shenzhen, Guangdong 518129 (CN)
(72) Inventor: TANG, Binsong, Shenzhen Guangdong 518129 (CN); XING, Pingping, Shenzhen Guangdong 518129 (CN)
(74) Representative: Gill Jennings & Every LLP
(86) International application number: PCT/CN2014/075836
(87) International publication number: WO 2015/161414

(56) References cited:
- WO-A1-2012/110054
- CN-A- 102 131 207
- CN-A- 103 326 815
- CN-A- 103 385 017
- CN-A- 103 428 730
- CN-A- 103 607 728
- CN-A- 103 703 818
- CN-A- 103 733 675
- CN-A- 103 733 691
- "Environmental Engineering (EE); Principles for Mobile Network level energy efficiency", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. EE EEPS, no. V1.1.1, 1 November 2012 (2012-11-01), XP014092613,
- "3GPP TS 37.320 V10.2.0 (2011-06); 3rd Generation Partnership Project; Technical Specification Group Radio Access Network; Universal Terrestrial Radio Access (UTRA) and Evolved Universal Terrestrial Radio Access (E-UTRA); Radio measurement collection for Minimization of Drive Tests (MDT); Overall d", , 1 June 2011 (2011-06-01), pages 1-17, XP055028274, Retrieved from the Internet: URL:http://www.3gpp.org/ftp/Specs/archive/ 37_series/37.320/37320-a20.zip [retrieved on 2012-05-29]

## Description

### TECHNICAL FIELD

The present invention relates to the communications field, and in particular, to a method for determining a KPI degradation cause and an apparatus.

### BACKGROUND

During network operation and maintenance of a wireless communications system, an operator needs to devote a great quantity of labor and material resources to perform a drive test. To reduce drive test work of the operator during the network operation and maintenance, and reduce problems that cannot be resolved by the drive test, an MDT (Minimization of Drive Tests, Minimization of Drive Tests) measurement is proposed.

Currently, during MDT measurement, when an OSS (Operation Support System, operation support system) finds that a KPI (Key Performance Indicator, key performance indicator) of an area is less than a preset threshold, the OSS sends a measurement instruction to a UE (User Equipment, user equipment), so that the UE starts to perform the MDT measurement according to the measurement instruction, and reports MDT measurement information to a base station. Then, the base station reports the MDT measurement information to the OSS. In this way, the OSS may perform network optimization according to the MDT measurement information. The MDT measurement may be classified into two types: Immediate MDT (immediate MDT) and Logged MDT (logged MDT). Specifically, the Immediate MDT is an MDT manner in which, after the OSS performs MDT configuration for the UE according to an RRC (Radio Resource Control, radio resource control) protocol, the UE performs an MDT measurement in a connected state, and immediately reports MDT measurement information to the OSS. The Logged MDT is an MDT manner in which, after the OSS performs MDT configuration for the UE, the UE performs an MDT measurement after entering an idle state and logs MDT measurement information, and then the UE reports the logged MDT measurement information to the OSS after entering a connected state.

However, in one aspect, if an MDT measurement is performed by using Immediate MDT, that the UE reports the MDT measurement information to a network and that the UE reports service information to the OSS are implemented by using a shared uplink channel, and resources and time of the uplink channel are occupied when the UE reports the MDT measurement information by using the uplink channel. Therefore, available resources and time of the uplink channel are reduced when the UE reports the service information, and as a result, quality of an uplink service performed by the UE is affected. In another aspect, in the foregoing two existing MDT measurement manners, a large amount of MDT measurement information that is measured by the UE by means of the Immediate MDT is reported to the base station, and then, the base station forwards the MDT measurement information to the OSS; or after network troubleshooting, a large amount of MDT measurement information that is measured by the UE by means of the Logged MDT is reported to the base station, and then, the base station forwards the MDT measurement information to the OSS. Therefore, the network suffers a large amount of concentrated impact, and as a result, network problem processing efficiency of the OSS is low.

WO2012/110054 teaches a technique for configuring and collecting network performance measurements in a mobile communications network.

CN102131207 teaches a method, device and system for reporting measurements in a communications network.

### SUMMARY

The present invention provide a method, as in claim 1, for determining a KPI degradation cause and a system, as in claim 7, which can reduce reporting overheads of a UE, ensure quality of an uplink service performed by the UE, decrease impact of reported measurement information on a network, and improve network problem processing efficiency.

To achieve the foregoing objective, the following technical solutions are used in the embodiments of the present invention:
method for determining a key performance indicator, KPI degradation cause in a wireless communications system, the system comprising a first base station, a second base station, user equipment, and an operation support system, the method including:
receiving, by a first base station, a service message sent by user equipment UE, where the service message carries first measurement information, the first measurement information is information about a service measurement performed by the UE on a first cell, and the first cell is served by the first base station;
obtaining, by the first base station, the first measurement information according to the service message;
generating, by the first base station, minimized network test MNT measurement information according to the first measurement information; and
sending, by the first base station, the MNT measurement information to an operation support system OSS, where the MNT measurement information is used by the OSS for determining the key performance indicator KPI degradation cause.
In a first possible implementation manner of the first aspect, when the first base station determines that the UE is handed over from the first cell to a second cell, the second cell is served by a second base station, where
the sending, by the first base station, the MNT measurement information to an OSS specifically includes:
   sending, by the first base station, the MNT measurement information to the second base station, so that the second base station sends the MNT measurement information to the OSS, wherein the MNT measurement information is used by the OSS for determining a key performance indicator, KPI, degradation cause and wherein the second cell is served by the second base station.

After the generating, by the first base station, MNT measurement information according to the first measurement information, and before the sending, by the first base station, the MNT measurement information to an OSS, the method further includes:
receiving, by the first base station, a first measurement instruction sent by the OSS, where the first measurement instruction is used to instruct the first base station to send the MNT measurement information to the OSS, where
the sending, by the first base station, the MNT measurement information to an OSS specifically includes:
   sending, by the first base station, the MNT measurement information to the OSS according to the first measurement instruction.

With reference to any one of the foregoing first aspect or the first possible implementation manner and the second possible implementation manner of the first aspect, in a third possible implementation manner,
the MNT measurement information includes at least one measurement information item of an identifier of the first cell, signal strength of the first cell, signal quality of the first cell, location information of the UE, a block bit error rate of a physical downlink control channel PDCCH, or a block bit error rate of a physical downlink shared channel PDSCH.

Another method for determining a KPI degradation cause, includes:
receiving, by an operation support system OSS, minimized network test MNT measurement information sent by a first base station, where the MNT measurement information is generated by the first base station according to first measurement information after the first base station receives a service message sent by user equipment UE and obtains the first measurement information according to the service message, the service message carries the first measurement information, the first measurement information is information about a service measurement performed by the UE on a first cell, and the first cell is served by the first base station; and
determining, by the OSS, the key performance indicator KPI degradation cause according to the MNT measurement information.

When the OSS determines that the UE is handed over from the first cell to a second cell, the second cell is served by a second base station, where
the receiving, by an OSS, MNT measurement information sent by a first base station specifically includes:
receiving, by the OSS, the MNT measurement information sent by the second base station, where the MNT measurement information is sent by the first base station to the second base station.

Before the receiving, by an OSS, MNT measurement information sent by a first base station, the method may further include:
sending, by the OSS, a first measurement instruction to the first base station, where the first measurement instruction is used to instruct the first base station to send the MNT measurement information to the OSS.

Before the receiving, by the OSS, the MNT measurement information sent by the second base station, the method further may include:
sending, by the OSS, a second measurement instruction to the second base station, where the second measurement instruction is used to instruct the second base station to send the MNT measurement information to the OSS.

When the OSS determines that the UE is handed over from the first cell to the second cell, and the OSS fails in determining the KPI degradation cause according to the MNT measurement information, the method may further include:
obtaining, by the OSS, an identifier of the second base station; and
determining, by the OSS, an identifier of the second cell according to the identifier of the second base station.

The MNT measurement information includes an identifier of the first cell, and after the determining, by the OSS, an identifier of the second cell according to the identifier of the second base station, the method may further include:
determining, by the OSS according to the identifier of the first cell and the identifier of the second cell, whether the KPI degradation cause is a neighboring cell management fault.

The determining, by the OSS, the KPI degradation cause according to the MNT measurement information may include:
comparing, by the OSS, each measurement information item in the MNT measurement information with a preset threshold corresponding to each measurement information item; and
determining, by the OSS, the KPI degradation cause according to a comparison result between each measurement information item and the preset threshold.

The determining, by the OSS, the KPI degradation cause according to a comparison result between each measurement information item and the preset threshold may include:
determining, by the OSS if at least one measurement information item in all measurement information items does not satisfy the preset threshold corresponding to the at least one measurement information item, that the KPI degradation cause is the at least one measurement information item.

The MNT measurement information may include at least one measurement information item of signal strength of the first cell, signal quality of the first cell, a block bit error rate of a physical downlink control channel PDCCH, or a block bit error rate of a physical downlink shared channel PDSCH, where
the determining, by the OSS if at least one measurement information item in all measurement informations does not satisfy the preset threshold corresponding to the at least one measurement information item, that the KPI degradation cause is the at least one measurement information item specifically includes:
determining, by the OSS if at least one measurement information item of the signal strength of the first cell, the signal quality of the first cell, the block bit error rate of the PDCCH, or the block bit error rate of the PDSCH does not satisfy the preset threshold corresponding to the at least one measurement information item, that the KPI degradation cause is correspondingly at least one of: the signal strength of the first cell is weak, the signal quality of the first cell is poor, the block bit error rate of the PDCCH is high, or the block bit error rate of the PDSCH is high.

The MNT measurement information may further include location information of the UE, where
the determining, by the OSS if at least one measurement information item of the signal strength of the first cell, the signal quality of the first cell, the block bit error rate of the PDCCH, or the block bit error rate of the PDSCH does not satisfy the preset threshold corresponding to the at least one measurement information item, that the KPI degradation cause is correspondingly at least one of: the signal strength of the first cell is weak, the signal quality of the first cell is poor, the block bit error rate of the PDCCH is high, or the block bit error rate of the PDSCH is high specifically includes:
if at least one measurement information item of the signal strength of the first cell, the signal quality of the first cell, the block bit error rate of the PDCCH, or the block bit error rate of the PDSCH does not satisfy the preset threshold corresponding to the at least one measurement information item, determining, by the OSS according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

Another example provides a method for determining a KPI degradation cause, including:
performing, by user equipment UE, a Minimization of Drive Tests MDT measurement for a first cell, and obtaining the MDT measurement information, where the first cell is served by a first base station; and
reporting, by the UE, the MDT measurement information to the first base station in a service interval, where the service interval is an interval of service data transmission performed by the UE.

The reporting, by the UE, the MDT measurement information to the first base station in a service interval specifically includes:
sending, by the UE, radio resource control protocol RRC signaling to the first base station in the service interval, where the RRC signaling carries the MDT measurement information.

The reporting, by the UE, the MDT measurement information to the first base station in a service interval specifically includes:
sending, by the UE, uplink data to the first base station in the service interval, where the uplink data carries the MDT measurement information.

The service interval includes an uplink interval of a circuit switched CS service and a small packet interval of a packet switched PS service.

Another example provides a method for determining a KPI degradation cause, including:
receiving, by a first base station, Minimization of Drive Tests MDT measurement information that is reported by user equipment UE in a service interval, where the service interval is an interval of service data transmission performed by the UE, the MDT measurement information is information about an MDT measurement performed by the UE on a first cell, and the first cell is served by the first base station; and
sending, by the first base station, the MDT measurement information to an operation support system OSS.

The service interval includes an uplink interval of a circuit switched CS service and a small packet interval of a packet switched PS service.

According to another aspect, an embodiment of the present invention provides a system for determining a key performance indicator, KPI, degradation cause, the system comprising a first base station, a second base station, user equipment, and an operation support system wherein; the first base station, includes:
a receiving unit, configured to receive a service message sent by user equipment UE, where the service message carries first measurement information, the first measurement information is information about a service measurement performed by the UE on a first cell, and the first cell is served by the first base station;
an obtaining unit, configured to obtain the first measurement information according to the service message received by the receiving unit;
a generation unit, configured to generate minimized network test MNT measurement information according to the first measurement information obtained by the obtaining unit; and
a sending unit, configured to send the MNT measurement information generated by the generation unit to an operation support system OSS, where the MNT measurement information is used by the OSS for determining a key performance indicator KPI degradation cause; and the OSS, includes:
   a receiving unit, configured to receive minimized network test MNT measurement information sent by a first base station, where the MNT measurement information is generated by the first base station according to first measurement information after the first base station receives a service message sent by user equipment UE and obtains the first measurement information according to the service message, the service message carries the first measurement information, the first measurement information is information about a service measurement performed by the UE on a first cell, and the first cell is served by the first base station; and
   a determining unit, configured to determine a key performance indicator KPI degradation cause according to the MNT measurement information received by the receiving unit.

The receiving unit is specifically configured to: when the determining unit determines that the UE is handed over from the first cell to a second cell, receive the MNT measurement information sent by the second base station, where the MNT measurement information is sent by the first base station to the second base station, and the second cell is served by the second base station.

When the first base station determines that the UE is handed over from the first cell to a second cell, the second cell is served by a second base station, where
the sending unit is specifically configured to send the MNT measurement information generated by the generation unit to the second base station, and the second base station sends the MNT measurement information to the OSS.

The receiving unit is further configured to: after the generation unit generates the MNT measurement information according to the first measurement information obtained by the obtaining unit, and before the sending unit sends the MNT measurement information generated by the generation unit to the OSS, receive a first measurement instruction sent by the OSS, where the first measurement instruction is used to instruct to send the MNT measurement information generated by the generation unit to the OSS; and
the sending unit is specifically configured to send the MNT measurement information generated by the generation unit to the OSS according to the first measurement instruction received by the receiving unit.

The MNT measurement information generated by the generation unit includes at least one measurement information item of an identifier of the first cell, signal strength of the first cell, signal quality of the first cell, location information of the UE, a block bit error rate of a physical downlink control channel PDCCH, or a block bit error rate of a physical downlink shared channel PDSCH.

The OSS further includes a sending unit, where
the sending unit is configured to: before the receiving unit receives the MNT measurement information sent by the first base station, send a first measurement instruction to the first base station, where the first measurement instruction is used to instruct the first base station to send the MNT measurement information to the OSS.

The OSS further includes a sending unit, where
the sending unit is configured to: before the receiving unit receives the MNT measurement information sent by the second base station, send a second measurement instruction to the second base station, where the second measurement instruction is used to instruct the second base station to send the MNT measurement information to the OSS.

The OSS further includes an obtaining unit, where
the obtaining unit is configured to: when the determining unit determines that the UE is handed over from the first cell to the second cell, and fails in determining the KPI degradation cause according to the MNT measurement information received by the receiving unit, obtain an identifier of the second base station; and
the determining unit is further configured to determine an identifier of the second cell according to the identifier of the second base station obtained by the obtaining unit.

The MNT measurement information received by the receiving unit includes an identifier of the first cell, where
the determining unit is further configured to: after determining the identifier of the second cell according to the identifier of the second base station obtained by the obtaining unit, determine, according to the identifier of the first cell and the identifier of the second cell, whether the KPI degradation cause is a neighboring cell management fault.

The OSS further includes a comparison unit, where
the comparison unit is configured to compare each measurement information item in the MNT measurement information received by the receiving unit with a preset threshold corresponding to each measurement information item; and
the determining unit is specifically configured to determine the KPI degradation cause according to a comparison result, obtained by means of comparison by the comparison unit, between each measurement information item and the preset threshold.

The determining unit is further specifically configured to: if it is obtained by means of comparison by the comparison unit that at least one measurement information item in all measurement information items does not satisfy the preset threshold corresponding to the at least one measurement information item, determine that the KPI degradation cause is the at least one measurement information item.

The MNT measurement information received by the receiving unit includes at least one measurement information item of signal strength of the first cell, signal quality of the first cell, a block bit error rate of a physical downlink control channel PDCCH, or a block bit error rate of a physical downlink shared channel PDSCH, where
the determining unit is further specifically configured to: if it is obtained by means of comparison by the comparison unit that at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine that the KPI degradation cause is correspondingly at least one of: the signal strength of the first cell is weak, the signal quality of the first cell is poor, the block bit error rate of the PDCCH is high, or the block bit error rate of the PDSCH is high.

The MNT measurement information received by the receiving unit further includes location information of the UE, where
the determining unit is further specifically configured to: if it is obtained by means of comparison by the comparison unit that at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine, according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

Another example provides a UE, including:
a measurement unit, configured to perform a Minimization of Drive Tests MDT measurement on a first cell,
an obtaining unit, configured to obtain MDT measurement information measured by the measurement unit, where the first cell is served by a first base station; and
a sending unit, configured to report the MDT measurement information obtained by the obtaining unit to the first base station in a service interval, where the service interval is an interval of service data transmission performed by the UE.

The sending unit is specifically configured to send radio resource control protocol RRC signaling to the first base station in the service interval, where the RRC signaling carries the MDT measurement information obtained by the obtaining unit.

The sending unit is specifically configured to send uplink data to the first base station in the service interval, where the uplink data carries the MDT measurement information obtained by the obtaining unit.

The service interval includes an uplink interval of a circuit switched CS service and a small packet interval of a packet switched PS service.

Another example provides a first base station, including:
a receiving unit, configured to receive Minimization of Drive Tests MDT measurement information that is reported by user equipment UE in a service interval, where the service interval is an interval of service data transmission performed by the UE, the MDT measurement information is information about an MDT measurement performed by the UE on a first cell, and the first cell is served by the first base station; and
a sending unit, configured to send the MDT measurement information received by the receiving unit to an operation support system OSS.

The service interval includes an uplink interval of a circuit switched CS service and a small packet interval of a packet switched PS service.

Another example provides a first base station, including:
a receiver, configured to receive a service message sent by user equipment UE, where the service message carries first measurement information, the first measurement information is information about a service measurement performed by the UE on a first cell, and the first cell is served by the first base station;
a processor, configured to obtain the first measurement information according to the service message received by the receiver, and generate minimized network test MNT measurement information according to the first measurement information; and
a transmitter, configured to send the MNT measurement information generated by the processor to an operation support system OSS, where the MNT measurement information is used by the OSS for determining a key performance indicator KPI degradation cause.

The receiver is further configured to: after the processor generates the MNT measurement information according to the first measurement information, and before the transmitter sends the MNT measurement information generated by the processor to the OSS, receive a first measurement instruction sent by the OSS, where the first measurement instruction is used to instruct to send the MNT measurement information generated by the processor to the OSS; and
the transmitter is specifically configured to send the MNT measurement information generated by the processor to the OSS according to the first measurement instruction received by the receiver.

The MNT measurement information generated by the processor includes at least one measurement information item of an identifier of the first cell, signal strength of the first cell, signal quality of the first cell, location information of the UE, a block bit error rate of a physical downlink control channel PDCCH, or a block bit error rate of a physical downlink shared channel PDSCH.

Another example provides an OSS, including:
a receiver, configured to receive minimized network test MNT measurement information sent by a first base station, where the MNT measurement information is generated by the first base station according to first measurement information after the first base station receives a service message sent by user equipment UE and obtains the first measurement information according to the service message, the service message carries the first measurement information, the first measurement information is information about a service measurement performed by the UE on a first cell, and the first cell is served by the first base station; and
a processor, configured to determine a key performance indicator KPI degradation cause according to the MNT measurement information received by the receiver.

The receiver is specifically configured to: when the processor determines that the UE is handed over from the first cell to a second cell, receive the MNT measurement information sent by the second base station, where the MNT measurement information is sent by the first base station to the second base station, and the second cell is served by the second base station.

The OSS further includes a transmitter, where
the transmitter is configured to: before the receiver receives the MNT measurement information sent by the first base station, send a first measurement instruction to the first base station, where the first measurement instruction is used to instruct the first base station to send the MNT measurement information to the OSS.

The OSS further includes a transmitter, where
the transmitter is configured to: before the receiver receives the MNT measurement information sent by the second base station, send a second measurement instruction to the second base station, where the second measurement instruction is used to instruct the second base station to send the MNT measurement information to the OSS.

The processor is further configured to: when determining that the UE is handed over from the first cell to the second cell, and failing in determining the KPI degradation cause according to the MNT measurement information, obtain an identifier of the second base station, and determine an identifier of the second cell according to the identifier of the second base station.

The MNT measurement information received by the receiver includes an identifier of the first cell, where
the processor is further configured to: after determining the identifier of the second cell according to the identifier of the second base station, determine, according to the identifier of the first cell and the identifier of the second cell, whether the KPI degradation cause is a neighboring cell management fault.

The processor is further configured to compare each measurement information item in the MNT measurement information received by the receiver with a preset threshold corresponding to each measurement information item, and determine the KPI degradation cause according to a comparison result between each measurement information item and the preset threshold.

The processor is specifically configured to: if at least one measurement information item in all measurement information items does not satisfy the preset threshold corresponding to the at least one measurement information item, determine that the KPI degradation cause is the at least one measurement information item.

The MNT measurement information received by the receiver includes at least one measurement information item of signal strength of the first cell, signal quality of the first cell, a block bit error rate of a physical downlink control channel PDCCH, or a block bit error rate of a physical downlink shared channel PDSCH, where
the processor is further specifically configured to: if at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine that the KPI degradation cause is correspondingly at least one of: the signal strength of the first cell is weak, the signal quality of the first cell is poor, the block bit error rate of the PDCCH is high, or the block bit error rate of the PDSCH is high.

The MNT measurement information received by the receiver further includes location information of the UE, where
the processor is further specifically configured to: if at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine, according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

Another example embodiment provides a UE, including:
a processor, configured to perform a Minimization of Drive Tests MDT measurement on a first cell, and obtain the MDT measurement information, where the first cell is served by a first base station; and
a transmitter, configured to report the MDT measurement information obtained by the processor to the first base station in a service interval, where the service interval is an interval of service data transmission performed by the UE.

The transmitter is specifically configured to send radio resource control protocol RRC signaling to the first base station in the service interval, where the RRC signaling carries the MDT measurement information obtained by the processor.

The transmitter is specifically configured to send uplink data to the first base station in the service interval, where the uplink data carries the MDT measurement information obtained by the processor.

The service interval includes an uplink interval of a circuit switched CS service and a small packet interval of a packet switched PS service.

Another example provides a first base station, including:
a receiver, configured to receive Minimization of Drive Tests MDT measurement information that is reported by user equipment UE in a service interval, where the service interval is an interval of service data transmission performed by the UE, the MDT measurement information is information about an MDT measurement performed by the UE on a first cell, and the first cell is served by the first base station; and
a transmitter, configured to send the MDT measurement information received by the receiver to an operation support system OSS.

The service interval includes an uplink interval of a circuit switched CS service and a small packet interval of a packet switched PS service.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is schematic flowchart 1 of a method for determining a KPI degradation cause according to an embodiment of the present invention;
FIG. 2 is schematic flowchart 2 of a method for determining a KPI degradation cause according to an embodiment of the present invention;
FIG. 3 is schematic flowchart 1 of another method for determining a KPI degradation cause according to an embodiment of the present invention;
FIG. 4 is schematic flowchart 2 of another method for determining a KPI degradation cause according to an embodiment of the present invention;
FIG. 5 is interaction diagram 1 of a method for determining a KPI degradation cause according to an embodiment of the present invention;
FIG. 6 is interaction diagram 2 of a method for determining a KPI degradation cause according to an embodiment of the present invention;
FIG. 7 is interaction diagram 3 of a method for determining a KPI degradation cause according to an embodiment of the present invention;
FIG. 8 is an interaction diagram of another method for determining a KPI degradation cause according to an embodiment of the present invention;
FIG. 9 is schematic structural diagram 1 of a first base station according to an embodiment of the present invention;
FIG. 10 is schematic structural diagram 1 of an OSS according to an embodiment of the present invention;
FIG. 11 is schematic structural diagram 2 of an OSS according to an embodiment of the present invention;
FIG. 12 is schematic structural diagram 3 of an OSS according to an embodiment of the present invention;
FIG. 13 is schematic structural diagram 4 of an OSS according to an embodiment of the present invention;
FIG. 14 is schematic structural diagram 1 of a UE according to an embodiment of the present invention;
FIG. 15 is schematic structural diagram 1 of a first base station according to an embodiment of the present invention;
FIG. 16 is schematic structural diagram 2 of a first base station according to an embodiment of the present invention;
FIG. 17 is schematic structural diagram 5 of an OSS according to an embodiment of the present invention;
FIG. 18 is schematic structural diagram 6 of an OSS according to an embodiment of the present invention;
FIG. 19 is schematic structural diagram 2 of a UE according to an embodiment of the present invention; and
FIG. 20 is schematic structural diagram 2 of a first base station further according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A UE (User Equipment, user equipment) may be a wireless terminal, or a wired terminal. A wireless terminal may refer to a device that provides a user with only voice and/or data connectivity, a handheld device with a wireless connection function, or another processing device connected to a wireless modem. The wireless terminal may communicate with one or more core network devices over a RAN (Radio Access Network, radio access network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a PCS (Personal Communication Service, personal communication service) phone, a cordless telephone set, a Session Initiation Protocol (SIP) phone, a WLL (Wireless Local Loop, wireless local loop) station, or a PDA (Personal Digital Assistant, personal digital assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), or user equipment.

The method for determining a KPI degradation cause provided in the embodiments of the present invention is mainly applied to analyze the KPI degradation cause when KPI degradation occurs in a UE moving process.

### Embodiment 1

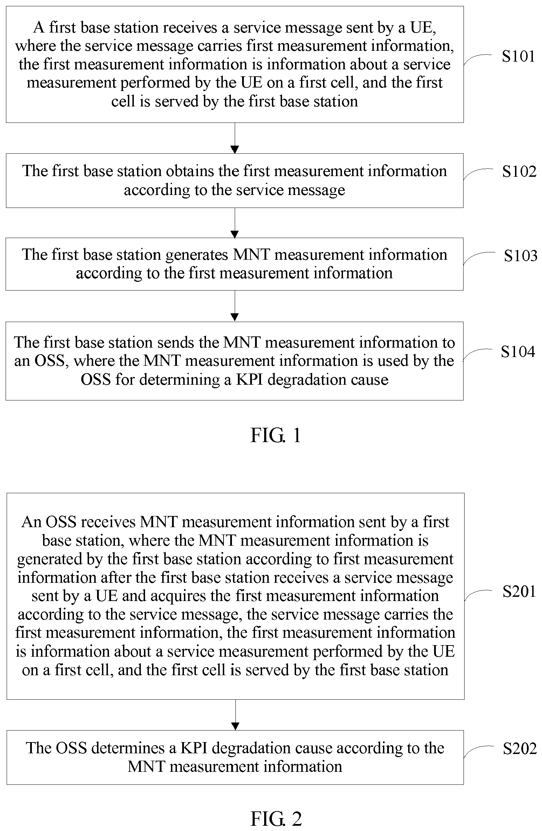

This embodiment of the present invention provides a method for determining a KPI degradation cause. As shown in FIG. 1, a method for determining a KPI degradation cause on a base station side is involved, and the method may include:
S101. A first base station receives a service message sent by a UE, where the service message carries (Piggy Back) first measurement information, the first measurement information is information about a service measurement performed by the UE on a first cell, and the first cell is served by the first base station.

The service measurement herein may be any measurement process executed by the UE in a cell, and mainly includes an MDT measurement in this embodiment of the present invention. It should be noted that, in network operation and maintenance of a wireless communications system, a KPI (Key Performance Indicator, key performance indicator) is an important reference indicator in a network maintenance phase, and KPI degradation may affect network communication of the UE. To ensure communication quality of the UE and better solve a network problem, the present invention proposes a method for determining a KPI degradation cause.

The KPI may include five types of indicators.

Specifically, the KPI may include an RRC (Radio Resource Control, radio resource control protocol) setup request success rate, an RRC re-setup success rate, a call drop rate, a handover success rate, and an E-RAB setup success rate.

It should be noted that, the RRC setup request success rate corresponds to a first threshold, the RRC re-setup success rate corresponds to a second threshold, the call drop rate corresponds to a third threshold, the handover success rate corresponds to a fourth threshold, and the E-RAB (Enhanced Radio Access Bearer, enhanced radio access bearer) setup success rate corresponds to a fifth threshold. An OSS (Operation Support System, operation support system) finds that the KPI degrades when any one of the following occurs: the RRC setup request success rate is lower than the first threshold, the RRC re-setup success rate is lower than the second threshold, the call drop rate is lower than the third threshold, the handover success rate is lower than the fourth threshold, or the E-RAB setup success rate is lower than the fifth threshold. Specifically, settings of specific values of the first threshold, the second threshold, the third threshold, the fourth threshold, and the fifth threshold may be determined according to actual situations of different operators, and the present invention sets no limit.

In this embodiment of the present invention, the UE is served by the first cell, and the first cell is served by the first base station. When performing a service, the UE needs to learn information about a service measurement of a cell in which the UE is located, that is, the first cell, and the information about the service measurement of the first cell may assist the UE in performing the service. Therefore, a service message sent by the UE when performing the service carries the information about the service measurement of the first cell.

It should be noted that, in this embodiment of the present invention, the KPI degradation means that a KPI of an operator network degrades.

In the method for determining a KPI degradation cause provided in this embodiment of the present invention, the first base station receives the service message sent by the UE, where the service message carries the first measurement information, and the first measurement information is information about a service measurement performed by the UE on the first cell when the UE is performing a service, where the first cell is served by the first base station.

Specifically, the UE wirelessly sends the service message to the first base station by using an uplink channel. That is, the first base station receives the service message sent by the UE.

Optionally, the first measurement information may include at least one measurement information of an identifier of the first cell, signal strength of the first cell, signal quality of the first cell, location information of the UE, a block bit error rate of a PDCCH (Physical Downlink Control Channel, physical downlink control channel), or a block bit error rate of a PDSCH (Physical Downlink Shared Channel, physical downlink shared channel).

S102. The first base station obtains the first measurement information according to the service message.

After receiving the service message sent by the UE, the first base station obtains the first measurement information according to the service message.

It should be noted that, because the service message sent by the UE to the first base station carries the first measurement information, the first base station may obtain the first measurement information from the service message. That is, the first base station collects the first measurement information.

S103. The first base station generates MNT (Minimized Network Test, minimized network test) measurement information according to the first measurement information.

After obtaining the first measurement information according to the service message, the first base station generates the MNT measurement information according to the first measurement information.

Specifically, after collecting the first measurement information, the first base station uses the first measurement information as measurement information used by the OSS for determining the KPI degradation cause. The first base station adds various protocol headers identifiable by the OSS such as an IP header or an SCTP (Stream Control Transmission Protocol, Stream Control Transmission Protocol) header to the first measurement information, and packs the first measurement information with an MNT envelope. That is, the first base station generates the MNT measurement information according to the first measurement information.

It should be noted that, the MNT measurement information is parameter information that may be required when the OSS determines the KPI degradation cause. Because the parameter information is collected by the first base station, the parameter information is referred to as MNT measurement information.

It is understandable that, in one aspect, because the first base station may obtain the first measurement information, and generate the MNT measurement information according to the first measurement information, the UE no longer needs to specially report the parameter information required by the OSS for determining the KPI degradation cause. That is, except performing a service measurement of an uplink service, the UE does not need to perform an MDT measurement or report the MDT measurement information to the first base station. Therefore, in this embodiment of the present invention, that the UE reports the MNT measurement information does not occupy a channel resource and time that are used by the UE for performing the uplink service, thereby decreasing reporting overheads of the UE and ensuring quality of the uplink service performed by the UE; and in another aspect, the first measurement information obtained by the first base station is carried in the service message reported by the UE; therefore, the first base station does not receive a large amount of measurement information at a time, thereby avoiding impact of reported measurement information on a network.

S104. The first base station sends the MNT measurement information to an OSS, where the MNT measurement information is used by the OSS for determining the KPI degradation cause.

After generating the MNT measurement information according to the first measurement information, the first base station sends the MNT measurement information to the OSS, where the MNT measurement information is used by the OSS for determining the KPI degradation cause.

Specifically, the first base station sends the MNT measurement information to the OSS through an Itf-N interface.

Optionally, the OSS may be a network management system or a network optimization system.

It should be noted that, the OSS may learn the MNT measurement information in the MNT envelope.

Further, when the OSS finds that the KPI degrades, the first base station sends the MNT measurement information to the OSS. A specific implementation process is described in detail in a subsequent embodiment, and is not described herein.

It is understandable that, because the first base station may directly generate the MNT measurement information, when the OSS needs the MNT measurement information, the first base station may directly send the MNT measurement information to the OSS, thereby improving network problem processing efficiency.

This embodiment of the present invention further provides a method for determining a KPI degradation cause. As shown in FIG. 2, a method for determining a KPI degradation cause on an OSS side is involved, and the method may include:
S201. An OSS receives MNT measurement information sent by a first base station, where the MNT measurement information is generated by the first base station according to first measurement information after the first base station receives a service message sent by a UE and obtains the first measurement information according to the service message, the service message carries the first measurement information, the first measurement information is information about a service measurement performed by the UE on a first cell, and the first cell is served by the first base station.

In this embodiment of the present invention, when a KPI degrades, the OSS receives the MNT measurement information sent by the first base station, where the MNT measurement information is generated by the first base station according to the first measurement information after the first base station receives the service message sent by the UE and obtains the first measurement information according to the service message, the service message carries the first measurement information, the first measurement information is information about a service measurement performed by the UE on the first cell, and the first cell is served by the first base station.

The OSS may manage and maintain a base station and a UE.

It should be noted that, the MNT measurement information is parameter information that may be required when the OSS determines the KPI degradation cause. Because the parameter information is collected by the first base station, the parameter information is referred to as MNT measurement information.

S202. The OSS determines the KPI degradation cause according to the MNT measurement information.

After receiving the MNT measurement information sent by the first base station, the OSS determines the KPI degradation cause according to the MNT measurement information.

Specifically, the OSS may separately determine, according to each MNT measurement information item in the MNT measurement information, which MNT measurement information item causes the KPI degradation cause.

This embodiment of the present invention provides a method for determining a KPI degradation cause. A first base station receives a service message sent by a UE, where the service message carries first measurement information, the first measurement information is information about a service measurement performed by the UE on a first cell, and the first cell is served by the first base station; the first base station obtains the first measurement information according to the service message; the first base station generates MNT measurement information according to the first measurement information; and finally, the first base station sends the MNT measurement information to an OSS. By using the solution, the first base station may finally generate the MNT measurement information by using the service message sent by the UE, and the first base station may send the MNT measurement information to the OSS, which helps the OSS determine the KPI degradation cause. Therefore, reporting overheads of the UE can be reduced, quality of an uplink service performed by the UE can be ensured, impact of reported measurement information on a network can be decreased, and network problem processing efficiency can be improved.

### Embodiment 2

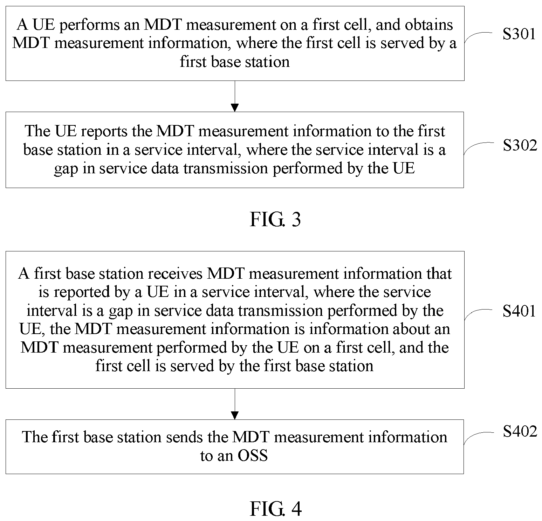

This embodiment of the present invention provides another method for determining a KPI degradation cause. As shown in FIG. 3, a method for determining a KPI degradation cause on a UE side is involved, and the method may include:
S301. A UE performs an MDT (Minimization of Drive Tests, Minimization of Drive Tests) measurement on a first cell, and obtains MDT measurement information, where the first cell is served by a first base station.

It should be noted that, a premise application scenario of the method for determining a KPI degradation cause provided in this embodiment of the present invention is: an OSS finds that a KPI degrades. The UE in this embodiment of the present invention is user equipment that can perform an MDT measurement.

The KPI may include five types of indicators.

Specifically, the KPI may include an RRC setup request success rate, an RRC re-setup success rate, a call drop rate, a handover success rate, and an E-RAB setup success rate.

It should be noted that, the RRC setup request success rate corresponds to a first threshold, the RRC re-setup success rate corresponds to a second threshold, the call drop rate corresponds to a third threshold, the handover success rate corresponds to a fourth threshold, and the E-RAB setup success rate corresponds to a fifth threshold. The OSS finds that the KPI degrades when any one of the following occurs: the RRC setup request success rate is lower than the first threshold, the RRC re-setup success rate is lower than the second threshold, the call drop rate is lower than the third threshold, the handover success rate is lower than the fourth threshold, or the E-RAB setup success rate is lower than the fifth threshold. Specifically, settings of specific values of the first threshold, the second threshold, the third threshold, the fourth threshold, and the fifth threshold may be determined according to actual situations of different operators, and the present invention sets no limit.

The UE performs an MDT measurement on the first cell, and obtains the MDT measurement information, where the first cell is served by the first base station.

It should be noted that, in a wireless communications system, a cell is served by a base station, and one base station may provide a service for multiple cells.

S302. The UE reports the MDT measurement information to the first base station in a service interval, where the service interval is an interval of service data transmission performed by the UE.

After performing an MDT measurement on the first cell and obtaining the MDT measurement information, the UE reports the MDT measurement information to the first base station in the service interval, where the service interval is an interval of the service data transmission performed by the UE.

It should be noted that, the MDT measurement information is parameter information required when the OSS determines the KPI degradation cause. Because the parameter information is measured and reported by the UE, the parameter information is referred to as MDT measurement information.

Further, after the UE reports the MDT measurement information to the first base station in the service interval, the first base station sends the MDT measurement information to the OSS, so that the OSS may determine the KPI degradation cause according to the MDT measurement information.

It is understandable that, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

Exemplarily, assuming that the UE performs a first service, and that the first service reported by the UE is A and B, the UE reports MDT measurement information to the first base station after the UE reports A and before the UE reports B.

This embodiment of the present invention provides another method for determining a KPI degradation cause. As shown in FIG. 4, a method for determining a KPI degradation cause on a base station side is involved, and the method may include:
S401. A first base station receives MDT measurement information that is reported by a UE in a service interval, where the service interval is an interval of service data transmission performed by the UE, the MDT measurement information is information about an MDT measurement performed by the UE on a first cell, and the first cell is served by the first base station.

It should be noted that, the UE is served by the first cell, and a premise application scenario of the method for determining a KPI degradation cause provided in this embodiment of the present invention is: the OSS finds that a KPI degrades.

The first base station receives the MDT measurement information that is reported by the UE in the service interval, where the service interval is an interval of the service data transmission performed by the UE, the MDT measurement information is information about an MDT measurement performed by the UE on the first cell, and the first cell is served by the first base station.

S402. The first base station sends the MDT measurement information to an OSS.

After receiving the MDT measurement information that is reported by the UE in the service interval, the first base station sends the MDT measurement information to the OSS.

It should be noted that, because the OSS may determine the KPI degradation cause according to the MDT measurement information, the first base station needs to send the MDT measurement information to the OSS, so that the OSS may determine the KPI degradation cause according to the MDT measurement information.

This embodiment of the present invention provides another method for determining a KPI degradation cause. A UE performs an MDT measurement on a first cell, and obtains MDT measurement information, where the first cell is served by a first base station; and the UE reports the MDT measurement information to the first base station in a service interval, where the service interval is an interval of service data transmission performed by the UE. By using the solution, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

### Embodiment 3

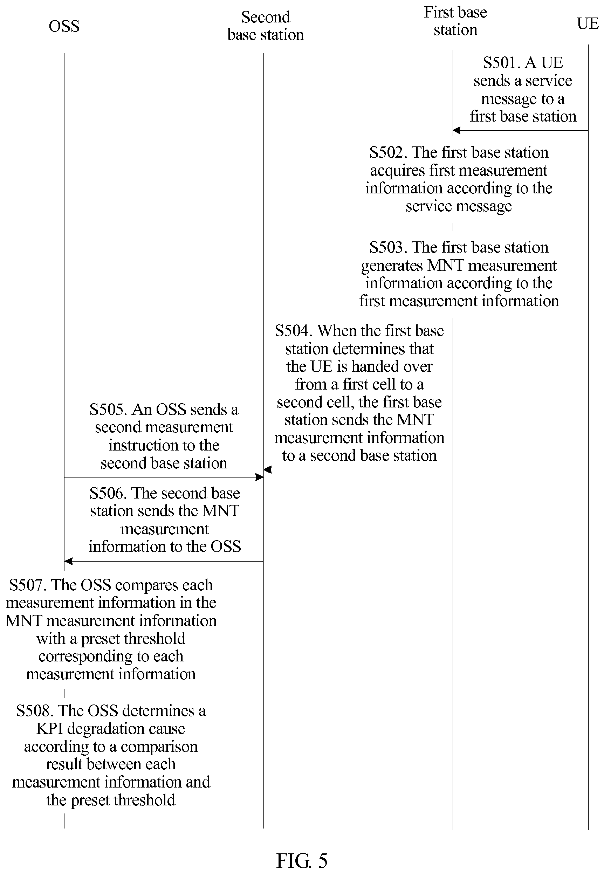

This embodiment of the present invention provides a method for determining a KPI degradation cause. As shown in FIG. 5, the method may include:
S501. A UE sends a service message to a first base station, where the service message carries first measurement information, the first measurement information is information about a service measurement performed by the UE on a first cell, and the first cell is served by the first base station.

It should be noted that, in network operation and maintenance of a wireless communications system, a KPI is an important reference indicator in a network maintenance phase, and KPI degradation may affect network communication of the UE. To ensure communication quality of the UE and better solve a network problem, the present invention proposes a method for determining a KPI degradation cause.

The KPI may include five types of indicators.

Specifically, the KPI may include an RRC setup request success rate, an RRC re-setup success rate, a call drop rate, a handover success rate, and an E-RAB setup success rate.

It should be noted that, the RRC setup request success rate corresponds to a first threshold, the RRC re-setup success rate corresponds to a second threshold, the call drop rate corresponds to a third threshold, the handover success rate corresponds to a fourth threshold, and the E-RAB setup success rate corresponds to a fifth threshold. An OSS finds that the KPI degrades when any one of the following occurs: the RRC setup request success rate is lower than the first threshold, the RRC re-setup success rate is lower than the second threshold, the call drop rate is lower than the third threshold, the handover success rate is lower than the fourth threshold, or the E-RAB setup success rate is lower than the fifth threshold. Specifically, settings of specific values of the first threshold, the second threshold, the third threshold, the fourth threshold, and the fifth threshold may be determined according to actual situations of different operators, and the present invention sets no limit.

In this embodiment of the present invention, the UE is served by the first cell, and the first cell is served by the first base station. When performing a service, the UE needs to learn information about a service measurement of a cell in which the UE is located, that is, the first cell, and the information about the service measurement of the first cell may assist the UE in performing the service. Therefore, a service message sent by the UE when performing the service carries the information about the service measurement of the first cell.

It should be noted that, in this embodiment of the present invention, the KPI degradation means that a KPI of an operator network degrades.

In the method for determining a KPI degradation cause provided in this embodiment of the present invention, the UE sends the service message to the first base station, where the service message carries the first measurement information, and the first measurement information is information about a service measurement performed by the UE on the first cell when the UE is performing a service, where the first cell is served by the first base station.

Specifically, the UE wirelessly sends the service message to the first base station by using an uplink channel. That is, the first base station receives the service message sent by the UE.

Optionally, the first measurement information may include at least one measurement information item of an identifier of the first cell, signal strength of the first cell, signal quality of the first cell, location information of the UE, a block bit error rate of a PDCCH, or a block bit error rate of a PDSCH.

Exemplarily, when the UE performs a call service, the UE sends a dialing message to the first base station, where the dialing message carries the identifier of the first cell, the signal strength of the first cell, the signal quality of the first cell, and the like.

S502. The first base station obtains the first measurement information according to the service message.

After the UE sends the service message to the first base station, the first base station obtains the first measurement information according to the service message.

It should be noted that, because the service message sent by the UE to the first base station carries the first measurement information, the first base station may obtain the first measurement information from the service message. That is, the first base station collects the first measurement information.

Exemplarily, when the UE performs a call service, after the first base station receives a dialing message reported by the UE, because the dialing message carries the identifier of the first cell, the signal strength of the first cell, the signal quality of the first cell, and the like, the first base station obtains the identifier of the first cell, the signal strength of the first cell, the signal quality of the first cell, and the like from the dialing message.

S503. The first base station generates MNT measurement information according to the first measurement information.

After obtaining the first measurement information according to the service message, the first base station generates the MNT measurement information according to the first measurement information.

Specifically, after collecting the first measurement information, the first base station uses the first measurement information as measurement information used by the OSS for determining the KPI degradation cause. The first base station adds various protocol headers identifiable by the OSS such as an IP header or an SCTP header to the first measurement information, and packs the first measurement information with an MNT envelope. That is, the first base station generates the MNT measurement information according to the first measurement information.

It should be noted that, the MNT measurement information is parameter information that may be required when the OSS determines the KPI degradation cause. Because the parameter information is collected by the first base station, the parameter information is referred to as MNT measurement information.

It is understandable that, in one aspect, because the first base station may obtain the first measurement information, and generate the MNT measurement information according to the first measurement information, the UE no longer needs to specially report the parameter information required by the OSS for determining the KPI degradation cause. That is, except performing a service measurement of an uplink service, the UE does not need to perform an MDT measurement or report the MDT measurement information to the first base station. Therefore, in this embodiment of the present invention, that the UE reports the MNT measurement information does not occupy a channel resource and time that are used by the UE for performing the uplink service, thereby decreasing reporting overheads of the UE and ensuring quality of the uplink service performed by the UE; and in another aspect, the first measurement information obtained by the first base station is carried in the service message reported by the UE; therefore, the first base station does not receive a large amount of measurement information at a time, thereby avoiding impact of reported measurement information on a network.

S504. When the first base station determines that the UE is handed over from the first cell to a second cell, the first base station sends the MNT measurement information to a second base station, where the second cell is served by the second base station.

After the first base station generates the MNT measurement information according to the first measurement information, and when the first base station determines that the UE is handed over from the first cell to the second cell, the first base station sends the MNT measurement information to the second base station, and the second base station sends the MNT measurement information to the OSS, where the second cell is served by the second base station.

It should be noted that, when the first base station determines that the UE is handed over from the first cell to the second cell, the method for determining a KPI degradation cause provided in this embodiment of the present invention may enable the first base station to send, to the second base station, the MNT measurement information that is generated after the UE measures the first cell. That is, when the first base station determines that the UE is handed over from the first cell to the second cell, the first base station mirrors the MNT measurement information corresponding to the first cell to the second base station. The second base station forms a measurement history record of a context of the UE for the MNT measurement information by using the identifier of the first cell as an index, and saves the measurement history record in the second base station. The measurement history record includes the MNT measurement information.

Specifically, when the first base station determines that the UE is handed over from the first cell to the second cell, the first base station sends the MNT measurement information to the second base station. When the OSS finds that the KPI degrades, the second base station receives a second measurement instruction sent by the OSS, and the second base station sends the MNT measurement information to the OSS according to the second measurement instruction, where the MNT measurement information is the MNT measurement information corresponding to the first cell.

It is understandable that, when receiving the second measurement instruction sent by the OSS, the second base station may also send, to the OSS, MNT measurement information that is obtained by the UE by performing a measurement on the second cell, is sent by the UE, and is received by the second base station, so that the OSS may determine the KPI degradation cause according to the MNT measurement information corresponding to the first cell and the MNT measurement information corresponding to the second cell, where a specific method for generating the MNT measurement information corresponding to the second cell by the second base station is the same as the method for generating the MNT measurement information corresponding to the first cell by the first base station, and details are not described herein again.

S505. An OSS sends a second measurement instruction to the second base station, where the second measurement instruction is used to instruct the second base station to send the MNT measurement information to the OSS.

When the first base station determines that the UE is handed over from the first cell to the second cell, after the first base station sends the MNT measurement information to the second base station, and when the OSS finds that the KPI degrades, the OSS sends the second measurement instruction to the second base station, where the second measurement instruction is used to instruct the second base station to send the MNT measurement information to the OSS, the MNT measurement information is generated according to the first measurement information after the first base station receives the service message sent by UE and obtains the first measurement information according to the service message, the service message carries the first measurement information, the first measurement information is information about a service measurement performed by the UE on the first cell, the first cell is served by the first base station, and the second cell is served by the second base station.

The OSS may manage and maintain a base station and a UE.

It should be noted that, the MNT measurement information is parameter information that may be required when the OSS determines the KPI degradation cause. Because the parameter information is collected by the first base station, the parameter information is referred to as MNT measurement information.

It is understandable that, when the OSS sends the second measurement instruction to the second base station, the second base station may also send, to the OSS, MNT measurement information that is obtained by the UE by performing a measurement on the second cell, is sent by the UE, and is received by the second base station, so that the OSS may determine the KPI degradation cause according to the MNT measurement information corresponding to the first cell and the MNT measurement information corresponding to the second cell, where a specific method for generating the MNT measurement information corresponding to the second cell by the second base station is the same as the method for generating the MNT measurement information corresponding to the first cell by the first base station, and details are not described herein again.

S506. The second base station sends the MNT measurement information to the OSS.

When the OSS determines that the UE is handed over from the first cell to the second cell, and after the OSS sends the second measurement instruction to the second base station, the OSS receives the MNT measurement information sent by the second base station. That is, the second base station sends the MNT measurement information to the OSS, where the MNT measurement information is sent by the first base station to the second base station.

Specifically, the second base station may send the MNT measurement information to the OSS through an Itf-N interface.

S507. The OSS compares each measurement information item in the MNT measurement information with a preset threshold corresponding to each measurement information item.

After the second base station sends the MNT measurement information to the OSS, the OSS compares each measurement information item in the MNT measurement information with the preset threshold corresponding to each measurement information item.

It should be noted that, the MNT measurement information includes information about multiple parameters, and each measurement information item in the MNT measurement information corresponds to one preset threshold. After receiving the MNT measurement information sent by the second base station, the OSS needs to compare each measurement information item in the MNT measurement information with the preset threshold corresponding to each measurement information item, so as to determine the KPI degradation cause.

S508. The OSS determines the KPI degradation cause according to a comparison result between each measurement information item and the preset threshold.

After comparing each measurement information item in the MNT measurement information with the preset threshold corresponding to the measurement information item, the OSS determines the KPI degradation cause according to the comparison result between each measurement information item and the preset threshold.

Specifically, if at least one measurement information item in all measurement information items does not satisfy the preset threshold corresponding to the at least one measurement information item, the OSS determines that the KPI degradation cause is the at least one measurement information item.

Optionally, the MNT measurement information includes at least one measurement information item of signal strength of the first cell, signal quality of the first cell, a block bit error rate of a PDCCH, or a block bit error rate of a PDSCH.

It should be noted that, the preset threshold corresponding to the signal strength of the first cell is a first preset threshold, the preset threshold corresponding to the signal quality of the first cell is a second preset threshold, the preset threshold corresponding to the block bit error rate of the PDCCH is a third preset threshold, and the preset threshold corresponding to the block bit error rate of the PDSCH is a fourth preset threshold.

Specifically, if at least one of the following is met: the signal strength of the first cell is lower than the first preset threshold, the signal quality of the first cell is lower than the second preset threshold, the block bit error rate of the PDCCH is higher than the third preset threshold, or the block bit error rate of the PDSCH is higher than the fourth preset threshold, the OSS determines that the KPI degradation cause is at least one of the signal strength of the first cell, the signal quality of the first cell, the block bit error rate of the PDCCH, or the block bit error rate of the PDSCH.

It should be noted that, if that the signal strength of the first cell is lower than the first preset threshold is met, and that the signal quality of the first cell is lower than the second preset threshold, that the block bit error rate of the PDCCH is higher than the third preset threshold, and that the block bit error rate of the PDSCH is higher than the fourth preset threshold are not met, the OSS determines that the KPI degradation cause is the signal strength of the first cell. If that the signal strength of the first cell is lower than the first preset threshold and that the signal quality of the first cell is lower than the second preset threshold are met, and that the block bit error rate of the PDCCH is higher than the third preset threshold and that the block bit error rate of the PDSCH is higher than the fourth preset threshold are not met, the OSS determines that the KPI degradation cause is that there is a problem in the signal strength of the first cell and the signal quality of the first cell.

Particularly, the first preset threshold, the second preset threshold, the third preset threshold, and the fourth preset threshold may be determined according to different actual situations, and the present invention sets no limit.

Exemplarily, in a situation, the signal strength of the first cell is -130 dBm (dBm), and the first preset threshold is -90 dBm. Because -130 is less than -90, the OSS determines that the KPI degradation cause is that the signal strength of the first cell is weak. In another situation, when the UE drops a call or after the UE is re-connected after a call drop, the signal strength of the first cell is -130 dBm, and the first preset threshold is -120 dBm. Because -130 is less than -120, the OSS determines that the KPI degradation cause is that there is a signal loophole in the first cell.

Further, if at least one measurement information item of the signal strength of the first cell, the signal quality of the first cell, the block bit error rate of the PDCCH, or the block bit error rate of the PDSCH does not satisfy the preset threshold corresponding to the at least one measurement information item, the OSS determines that the KPI degradation cause is correspondingly at least one of: the signal strength of the first cell is weak, the signal quality of the first cell is poor, the block bit error rate of the PDCCH is high, or the block bit error rate of the PDSCH is high.

Specifically, if at least one of the following is met: the signal strength of the first cell is lower than the first preset threshold, the signal quality of the first cell is lower than the second preset threshold, the block bit error rate of the PDCCH is higher than the third preset threshold, or the block bit error rate of the PDSCH is higher than the fourth preset threshold, the OSS determines that the KPI degradation cause is correspondingly at least one of: the signal strength of the first cell is weak, the signal quality of the first cell is poor, the block bit error rate of the PDCCH is high, or the block bit error rate of the PDSCH is high.

Optionally, the MNT measurement information further includes location information of the UE.

Further, if at least one measurement information item of the signal strength of the first cell, the signal quality of the first cell, the block bit error rate of the PDCCH, or the block bit error rate of the PDSCH does not satisfy the preset threshold corresponding to the at least one measurement information item, the OSS determines, according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

Specifically, if at least one of the following is met: the signal strength of the first cell is lower than the first preset threshold, the signal quality of the first cell is lower than the second preset threshold, the block bit error rate of the PDCCH is higher than the third preset threshold, or the block bit error rate of the PDSCH is higher than the fourth preset threshold, the OSS determines, according to the location information of the UE, that the KPI degradation cause is correspondingly at least one of: the signal strength of the first cell is weak in the location of the UE, the signal quality of the first cell is poor in the location of the UE, the block bit error rate of the PDCCH is high, or the block bit error rate of the PDSCH is high.

Exemplarily, the UE is in a location 1 of the first cell. If that the signal strength of the first cell is lower than the first preset threshold is met, and that the signal quality of the first cell is lower than the second preset threshold, that the block bit error rate of the PDCCH is higher than the third preset threshold, and that the block bit error rate of the PDSCH is higher than the fourth preset threshold are not met, the OSS may determine, according to the location information of the UE, that the KPI degradation cause is that the signal strength of the first cell is weak in the location 1. If that the signal strength of the first cell is lower than the first preset threshold and that the signal quality of the first cell is lower than the second preset threshold are met, and that the block bit error rate of the PDCCH is higher than the third preset threshold and that the block bit error rate of the PDSCH is higher than the fourth preset threshold are not met, the OSS may determine, according to the location information of the UE, that the KPI degradation cause is that the signal strength of the first cell is weak in the location 1 and that the signal quality of the first cell is poor in the location 1.

Further, manners in which the first base station sends the MNT measurement information to the second base station specifically include the following two types: (1) or (2).
(1) When the first base station determines that the UE is handed over from the first cell to the second cell, the first base station sends the MNT measurement information to the second base station through an X2 interface of the first base station.

When the first base station determines that the UE is handed over from the first cell to the second cell, the first base station sends the MNT measurement information to the second base station through the X2 interface of the first base station, and the second base station sends the MNT measurement information to the OSS, where the second cell is served by the second base station.

The X2 interface may implement inter-connection between base stations. That is, the X2 is an interface between the first base station and the second base station.

Specifically, because an X2 interface may be classified into a user plane and a control plane, a user plane interface in the X2 interface provides a user data transmission function between base stations, and a control plane interface in the X2 interface provides a signaling transmission function between the base stations.

It should be noted that, in this embodiment of the present invention, the X2 interface of the first base station may be the control plane interface in the X2 interface, so that the first base station may perform signaling interaction with the second base station through the X2 interface of the first base station. The X2 interface of the first base station may also be the user plane interface in the X2 interface, so that the first base station may perform data transmission with the second base station through the X2 interface of the first base station. A specific X2 interface type may be selected according to an actual situation, and the present invention sets no limit.

Further, the second base station also includes an X2 interface of the second base station, and the second base station may receive, through the X2 interface of the second base station, signaling or data sent by another base station, and may also send, through the X2 interface of the second base station, signaling or data to another interface.

A bottom layer bearer of the control plane interface is SCTP, and a bottom layer bearer of the user plane interface is UDP (User Datagram Protocol, User Datagram Protocol).
(2) When the first base station determines that the UE is handed over from the first cell to the second cell, the first base station sends the MNT measurement information to the second base station through an S1 interface of the first base station.

After the first base station generates the MNT measurement information according to the first measurement information, and when the first base station determines that the UE is handed over from the first cell to the second cell, the first base station sends the MNT measurement information to the second base station through the S1 interface of the first base station, so that the second base station sends the MNT measurement information to the OSS, where the second cell is served by the second base station.

It should be noted that, an S 1 interface is a communication interface between a base station and a core network device. That is, the first base station communicates with a core network device through the S1 interface of the first base station, and the second base station communicates with a core network device through an S 1 interface of the second base station.

The core network device in this embodiment of the present invention is a core network device shared by the first base station and the second base station.

Specifically, the first base station sends the MNT measurement information to the core network device through the S1 interface of the first base station, and the core network device sends the MNT measurement information to the second base station through an S1 interface of the core network device, where the core network device separately provides a service for the first base station and the second base station.

The core network device may be an MME (Mobility Management Entity, mobility management entity), an SGSN (Serving GPRS Support Node, serving GPRS support node), or an MSC (Mobile Switching Center, mobile switching center).

Specifically, using a PS (Packet Switch, packet switched) domain in a mobile communication system as an example, in the 4G (4th Generation, fourth generation of mobile communication technology), the core network device is an MME; in the 3G (3rd Generation, third generation of mobile communication technology), the core network device is an SGSN; and in the 2G (2nd Generation, second generation of mobile communication technology), the core network device is an SGSN. Using a CS (Circuit Switch, circuit switched) domain in the mobile communication system as an example, in the 3G/2G, the core network device is an MSC.

It is understandable that, base stations may share one core network device, or not share one core network device. In the method for determining a KPI degradation cause according to this embodiment of the present invention, the first base station and the second base station share one core network device.

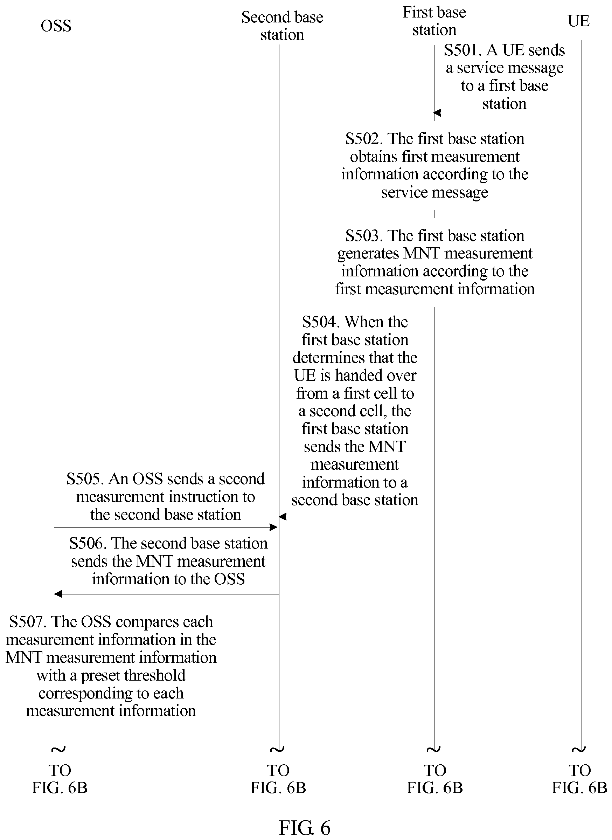

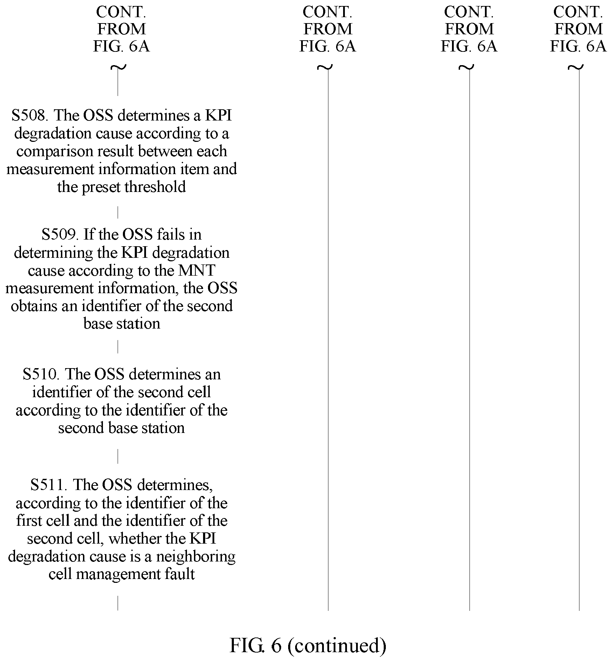

Further, this embodiment of the present invention further provides a method for determining a KPI degradation cause. As shown in FIG. 6, after S508, when the OSS fails in determining the KPI degradation cause according to the MNT measurement information, that is, when the OSS fails in determining the KPI degradation cause by using S507 and S508, the OSS determines a KPI degradation cause, and the method may further include:
S509. If the OSS fails in determining the KPI degradation cause according to the MNT measurement information, the OSS obtains an identifier of the second base station.

When the OSS determines the KPI degradation cause according to the comparison result between each measurement information item and the preset threshold, if the OSS fails in determining the KPI degradation cause according to the MNT measurement information, the OSS obtains the identifier of the second base station.

It should be noted that, when the OSS fails in determining the KPI degradation cause according to the MNT measurement information, because the OSS manages all base stations, the OSS may obtain information about a target base station of UE handover.

Exemplarily, when the UE is handed over from a cell 1 to a cell 2, and the OSS fails in determining the KPI degradation cause according to the MNT measurement information, the OSS first obtains the identifier of the second base station, where the second base station is a base station 2, and the second base station provides a service for the second cell.

S510. The OSS determines an identifier of the second cell according to the identifier of the second base station.

If the OSS fails in determining the KPI degradation cause according to the MNT measurement information, after the OSS obtains the identifier of the second base station, the OSS determines the identifier of the second cell according to the identifier of the second base station.

It should be noted that, the second cell is served by the second base station. After obtaining the identifier of the second base station, the OSS may determine the identifier of the second cell according to the identifier of the second base station.

Exemplarily, the second base station obtained by the OSS is the base station 2, and the OSS determines the identifier of the second cell according to information about a cell for which the base station 2 provides a service, that is, determines that a cell that provides a service for the UE is the cell 2.

S511. The OSS determines, according to the identifier of the first cell and the identifier of the second cell, whether the KPI degradation cause is a neighboring cell management fault, where the identifier of the first cell is carried in the MNT measurement information.

After determining the identifier of the second cell according to the identifier of the second base station, the OSS determines, according to the identifier of the first cell and the identifier of the second cell, whether the KPI degradation cause is a neighboring cell management fault, where the identifier of the first cell is carried in the MNT measurement information.

It should be noted that, when the UE is moving from one cell to another cell, the UE needs to be handed over between the cell and the another cell, and the UE can be properly handed over only when a parameter configuration of two cells of the UE handover indicates that the two cells are neighboring cells.

Particularly, when the UE is handed over from the first cell to the second cell, if the UE fails to be handed over, that is, when the OSS finds that the KPI degrades and that there is no problem such as poor signal strength, the OSS determines, according to the identifier of the first cell and the identifier of the second cell, whether the KPI degradation cause is a neighboring cell management fault.

Further, if it is determined that the KPI degradation cause is a neighboring cell management fault, the OSS may re-configure the first cell and the second cell to be neighboring cells between which the UE can be handed over, so as to solve a problem of a UE handover failure, thereby achieving a network optimization objective.

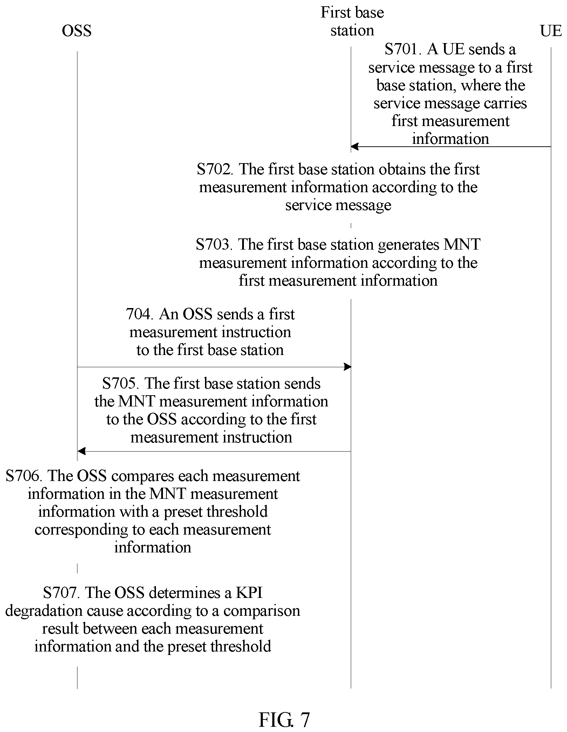

Further, as shown in FIG. 7, when an OSS determines that a UE is served by a first cell, this embodiment of the present invention further provides a method for determining KPI degradation cause, and the method may specifically include S701 to S707 as follows:
S701. A UE sends a service message to a first base station, where the service message carries first measurement information, the first measurement information is information about a service measurement performed by the UE on a first cell, and the first cell is served by the first base station.

For a specific process in which the UE sends the service message to the first base station and relevant descriptions, reference may be made to step S501 in this embodiment of the present invention and descriptions thereof, and details are not described herein again.

S702. The first base station obtains the first measurement information according to the service message.

For a specific process in which the first base station obtains the first measurement information according to the service message and relevant descriptions, reference may be made to step S502 in this embodiment of the present invention and descriptions thereof, and details are not described herein again.

S703. The first base station generates MNT measurement information according to the first measurement information.

For a specific process in which the first base station generates the MNT measurement information according to the first measurement information and relevant descriptions, reference may be made to step S503 in this embodiment of the present invention and descriptions thereof, and details are not described herein again.

S704. An OSS sends a first measurement instruction to the first base station, where the first measurement instruction is used to instruct the first base station to send the MNT measurement information to the OSS.

After the first base station generates the MNT measurement information according to the first measurement information, the OSS sends the first measurement instruction to the first base station. That is, the first base station receives the first measurement instruction sent by the OSS, where the first measurement instruction is used to instruct the first base station to send the MNT measurement information to the OSS.

It should be noted that, when the OSS finds that a KPI degrades, the OSS sends the first measurement instruction to the first base station. That is, the first base station receives the first measurement instruction sent by the OSS, where the first measurement instruction is used to instruct the first base station to send the MNT measurement information to the OSS, so that the OSS may determine the KPI degradation cause according to the MNT measurement information.

S705. The first base station sends the MNT measurement information to the OSS according to the first measurement instruction.

After the OSS sends the first measurement instruction to the first base station, the first base station sends the MNT measurement information to the OSS according to the first measurement instruction.

Specifically, the first base station sends the MNT measurement information to the OSS through an Itf-N interface.

Optionally, the OSS may be a network management system or a network optimization system.

Further, when the OSS finds that the KPI degrades, the first base station sends the MNT measurement information to the OSS.

It should be noted that, the MNT measurement information is parameter information that may be required when the OSS determines the KPI degradation cause.

It is understandable that, because the first base station may directly generate the MNT measurement information, when the OSS needs the MNT measurement information, the first base station may directly send the MNT measurement information to the OSS, thereby improving network problem processing efficiency.

S706. The OSS compares each measurement information iteminformation in the MNT measurement information with a preset threshold corresponding to each measurement information item.

For a specific process in which the OSS compares each measurement information item in the MNT measurement information with the preset threshold information item and relevant descriptions, reference may be made to step S703 in this embodiment of the present invention and descriptions thereof, and details are not described herein again.

S707. The OSS determines the KPI degradation cause according to a comparison result between each measurement information item and the preset threshold.

For a specific process in which the OSS determines the KPI degradation cause according to the comparison result between each measurement information item and the preset threshold and relevant descriptions, reference may be made to step S703 in this embodiment of the present invention and descriptions thereof, and details are not described herein again.

It is understandable that, in this embodiment of the present invention, after the OSS determines the KPI degradation cause, the OSS may perform corresponding adjustment according to the KPI degradation cause, so that the KPI recovers, thereby achieving a network optimization objective.

It should be noted that, the MNT measurement information may include all parameter information that can be measured by the UE when reporting a service, and the OSS may analyze the KPI degradation cause according to all the parameter information. Therefore, specific parameter information in the MNT measurement information is not limited in the present invention. For example, the MNT measurement information in this embodiment of the present invention may further include IOT (Interference Over Thermal Noise, interference over thermal noise) of the first cell.

This embodiment of the present invention provides a method for determining a KPI degradation cause. A first base station receives a service message sent by a UE, where the service message carries first measurement information, the first measurement information is information about a service measurement performed by the UE on a first cell, and the first cell is served by the first base station; the first base station obtains the first measurement information according to the service message; the first base station generates MNT measurement information according to the first measurement information; and finally, the first base station sends the MNT measurement information to an OSS. By using the solution, the first base station may finally generate the MNT measurement information by using the service message sent by the UE, and the first base station may send the MNT measurement information to the OSS, which helps the OSS determine the KPI degradation cause. Therefore, reporting overheads of the UE can be reduced, quality of an uplink service performed by the UE can be ensured, impact of reported measurement information on a network can be decreased, and network problem processing efficiency can be improved.

### Embodiment 4

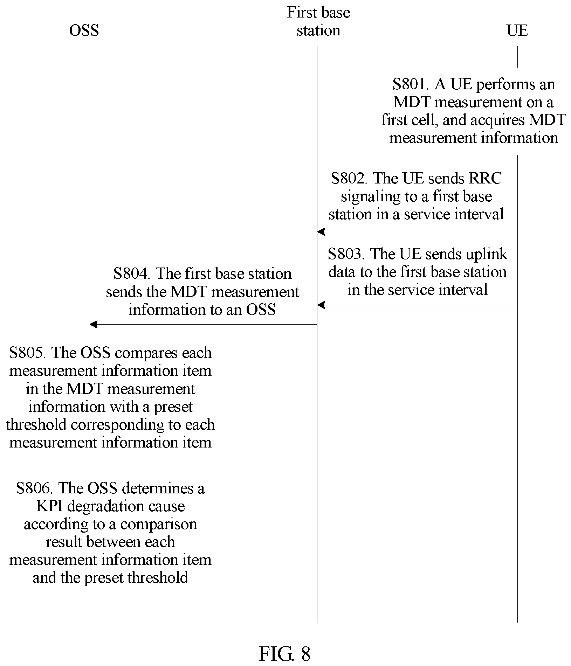

This embodiment of the present invention provides another method for determining a KPI degradation cause. As shown in FIG. 8, the method may include:
S801. A UE performs an MDT measurement on a first cell, and obtains MDT measurement information, where the first cell is served by a first base station.

It should be noted that, a premise application scenario of the method for determining a KPI degradation cause provided in this embodiment of the present invention is: an OSS finds that a KPI degrades. The UE in this embodiment of the present invention is user equipment that can perform an MDT measurement.

The KPI may include five types of indicators.

Specifically, the KPI may include an RRC setup request success rate, an RRC re-setup success rate, a call drop rate, a handover success rate, and an E-RAB setup success rate.

It should be noted that, the RRC setup request success rate corresponds to a first threshold, the RRC re-setup success rate corresponds to a second threshold, the call drop rate corresponds to a third threshold, the handover success rate corresponds to a fourth threshold, and the E-RAB setup success rate corresponds to a fifth threshold. The OSS finds that the KPI degrades when any one of the following occurs: the RRC setup request success rate is lower than the first threshold, the RRC re-setup success rate is lower than the second threshold, the call drop rate is lower than the third threshold, the handover success rate is lower than the fourth threshold, or the E-RAB setup success rate is lower than the fifth threshold. Specifically, settings of specific values of the first threshold, the second threshold, the third threshold, the fourth threshold, and the fifth threshold may be determined according to actual situations of different operators, and the present invention sets no limit.

The UE performs an MDT measurement on the first cell, and obtains the MDT measurement information, where the first cell is served by the first base station.

It should be noted that, in a wireless communications system, a cell is served by a base station, and one base station may provide a service for multiple cells.

S802. The UE sends RRC signaling to the first base station in a service interval, where the RRC signaling carries the MDT measurement information.

After performing an MDT measurement on the first cell and obtaining the MDT measurement information, the UE sends the RRC signaling to the first base station in the service interval, where the RRC signaling carries the MDT measurement information, and the service interval is an interval of service data transmission performed by the UE.

It should be noted that, the MDT measurement information is parameter information required when the OSS determines the KPI degradation cause. Because the parameter information is measured and reported by the UE, the parameter information is referred to as MDT measurement information.

Further, after the UE reports the MDT measurement information to the first base station in the service interval by sending the RRC signaling, the first base station sends the MDT measurement information to the OSS, so that the OSS may determine the KPI degradation cause according to the MDT measurement information.

It is understandable that, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

Optionally, the service interval includes an uplink interval of a CS service and a small packet interval of a PS service. For example, a CS service interval may be a service interval of a voice service, a service interval of a facsimile service, and the like. A PS service interval may be a service interval of webpage browsing.

Exemplarily, assuming that the UE performs a first service, and that the first service reported by the UE is A and B, the UE reports MDT measurement information to the first base station after the UE reports A and before the UE reports B.

S803. The UE sends uplink data to the first base station in the service interval, where the uplink data carries the MDT measurement information.

After performing an MDT measurement on the first cell and obtaining the MDT measurement information, the UE sends the uplink data to the first base station in the service interval, where the uplink data carries the MDT measurement information, and the service interval is an interval of service data transmission performed by the UE.

It should be noted that, the MDT measurement information is parameter information required when the OSS determines the KPI degradation cause. Because the parameter information is measured and reported by the UE, the parameter information is referred to as MDT measurement information.

Further, after the UE reports the MDT measurement information to the first base station in the service interval by sending the uplink data, the first base station sends the MDT measurement information to the OSS, so that the OSS may determine the KPI degradation cause according to the MDT measurement information.

It is understandable that, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

Optionally, the service interval includes an uplink interval of a CS service and a small packet interval of a PS service. For example, a CS service interval may be a service interval of a voice service, a service interval of a facsimile service, and the like. A PS service may be a service interval of webpage browsing.

Exemplarily, assuming that the UE performs a first service, and that the first service reported by the UE is A and B, the UE reports MDT measurement information to the first base station after the UE reports A and before the UE reports B.

It should be noted that, in this embodiment of the present invention, S802 and S803 are two parallel steps after S801. Therefore, in this embodiment of the present invention, an execution sequence of S802 and S803 after S801 is not limited. That is, after S801, S802 may be executed first, or S803 may be executed first.

S804. The first base station sends the MDT measurement information to an OSS.

After receiving the MDT measurement information that is reported by the UE in the service interval, the first base station sends the MDT measurement information to the OSS.

It should be noted that, because the OSS may determine the KPI degradation cause according to the MDT measurement information, the first base station needs to send the MDT measurement information to the OSS, so that the OSS may determine the KPI degradation cause according to the MDT measurement information.

S805. The OSS compares each measurement information item in the MDT measurement information with a preset threshold corresponding to each measurement information item.

After the first base station sends the MDT measurement information to the OSS, the OSS compares each measurement information item in the MDT measurement information with the preset threshold corresponding to each measurement information item.

It should be noted that, the MDT measurement information includes information about multiple parameters, and each measurement information item in the MDT measurement information corresponds to one preset threshold. After receiving the MDT measurement information sent by the second base station, the OSS needs to compare each measurement information item in the MDT measurement information with the preset threshold corresponding to each measurement information item, so as to determine the KPI degradation cause.

S806. The OSS determines the KPI degradation cause according to a comparison result between each measurement information item and the preset threshold.

The OSS compares each measurement information item in the MDT measurement information with the preset threshold corresponding to each measurement information item, and the OSS determines the KPI degradation cause according to the comparison result between each measurement information item and the preset threshold.

Specifically, if at least one measurement information item in all measurement information items does not satisfy the preset threshold corresponding to the at least one measurement information item, the OSS determines that the KPI degradation cause is the at least one measurement information item.

Optionally, the MDT measurement information may include signal strength of the first cell and signal quality of the first cell.

It should be noted that, the preset threshold corresponding to the signal strength of the first cell is a first preset threshold, and the preset threshold corresponding to the signal quality of the first cell is a second preset threshold.

Specifically, if at least one of the following is met: the signal strength of the first cell is lower than the first preset threshold, or the signal quality of the first cell is lower than the second preset threshold, the OSS determines that the KPI degradation cause is at least one of the signal strength of the first cell or the signal quality of the first cell.

It should be noted that, if that the signal strength of the first cell is lower than the first preset threshold is met; and that the signal quality of the first cell is lower than the second preset threshold is not met, the OSS determines that the KPI degradation cause is the signal strength of the first cell. If that the signal strength of the first cell is lower than the first preset threshold and that the signal quality of the first cell is lower than the second preset threshold are met, the OSS determines that the KPI degradation cause is that there is a problem in the signal strength of the first cell and the signal quality of the first cell.

Particularly, the first preset threshold and the second preset threshold may be determined according to different actual situations, and the present invention sets no limit.

Exemplarily, in a situation, the signal strength of the first cell is -130 dBm (dBm), and the first preset threshold is -90 dBm. Because -130 is less than -90, the OSS determines that the KPI degradation cause is that the signal strength of the first cell is weak. In another situation, when the UE drops a call or after the UE is re-connected after a call drop, the signal strength of the first cell is -130 dBm, and the first preset threshold is -120 dBm. Because -130 is less than -120, the OSS determines that the KPI degradation cause is that there is a signal loophole in the first cell.

Further, if at least one measurement information item of the signal strength of the first cell or the signal quality of the first cell does not satisfy the preset threshold corresponding to the at least one measurement information item, the OSS determines that the KPI degradation cause is correspondingly at least one of: the signal strength of the first cell is weak, or the signal quality of the first cell is poor.

Specifically, if at least one of the following is met: the signal strength of the first cell is lower than the first preset threshold, or the signal quality of the first cell is lower than the second preset threshold, the OSS determines that the KPI degradation cause is correspondingly at least one of: the signal strength of the first cell is weak, or the signal quality of the first cell is poor.

Optionally, the MDT measurement information further includes location information of the UE.

Further, if at least one measurement information item of the signal strength of the first cell or the signal quality of the first cell does not satisfy the preset threshold corresponding to the at least one measurement information item, the OSS determines, according to the location information of the UE, that the KPI degradation cause is correspondingly at least one of: the signal strength of the first cell is weak in a location of the UE, or the signal quality of the first cell is poor in the location of the UE.

Specifically, if at least one of the following is met: the signal strength of the first cell is lower than the first preset threshold, or the signal quality of the first cell is lower than the second preset threshold, the OSS determines, according to the location information of the UE, that the KPI degradation cause is correspondingly at least one of: the signal strength of the first cell is weak in the location of the UE, or the signal quality of the first cell is poor in the location of the UE.

Exemplarily, the UE is in a location 1 of the first cell. If that the signal strength of the first cell is lower than the first preset threshold is met, and that the signal quality of the first cell is lower than the second preset threshold, that the block bit error rate of the PDCCH is higher than the third preset threshold, and that the block bit error rate of the PDSCH is higher than the fourth preset threshold are not met, the OSS may determine, according to the location information of the UE, that the KPI degradation cause is that the signal strength of the first cell is weak in the location 1. If that the signal strength of the first cell is lower than the first preset threshold and that the signal quality of the first cell is lower than the second preset threshold are met, the OSS may determine, according to the location information of the UE, that the KPI degradation cause is that the signal strength of the first cell is weak in the location 1 and that the signal quality of the first cell is poor in the location 1.

It should be noted that, the MDT measurement information may include all parameter information obtained by the UE by means of an MDT measurement, and the OSS may analyze the KPI degradation cause according to all the parameter information. Therefore, specific parameter information in the MDT measurement information is not limited in the present invention.

This embodiment of the present invention provides another method for determining a KPI degradation cause. A UE performs an MDT measurement on a first cell, and obtains MDT measurement information, where the first cell is served by a first base station; and the UE reports the MDT measurement information to the first base station in a service interval, where the service interval is an interval of service data transmission performed by the UE. By using the solution, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

### Embodiment 5

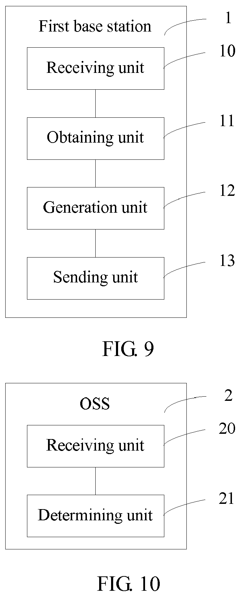

As shown in FIG. 9, this embodiment of the present invention provides a first base station 1. The first base station 1 corresponds to the method for determining a KPI degradation cause on the base station side, and the first base station 1 may include:
a receiving unit 10, configured to receive a service message sent by UE, where the service message carries first measurement information, the first measurement information is information about a service measurement performed by the UE on a first cell, and the first cell is served by the first base station;
an obtaining unit 11, configured to obtain the first measurement information according to the service message received by the receiving unit 10;
a generation unit 12, configured to generate MNT measurement information according to the first measurement information obtained by the obtaining unit 11; and
a sending unit 13, configured to send the MNT measurement information generated by the generation unit 12 to an OSS, where the MNT measurement information is used by the OSS for determining a KPI degradation cause.

Optionally, when the first base station determines that the UE is handed over from the first cell to a second cell, the second cell is served by a second base station, where
the sending unit 13 is specifically configured to send the MNT measurement information generated by the generation unit 12 to the second base station, so that the second base station sends the MNT measurement information to the OSS.

Optionally, the sending unit 13 is further specifically configured to send the MNT measurement information generated by the generation unit 12 to the second base station through an X2 interface.

Optionally, the sending unit 13 is further specifically configured to send the MNT measurement information generated by the generation unit 12 to the second base station through an S1 interface.

Optionally, the sending unit 13 is further specifically configured to send the MNT measurement information generated by the generation unit 12 to a core network device through an S1 interface, and the core network device sends the MNT measurement information to the second base station through an S1 interface of the core network device, where the core network device separately provides a service for the first base station and the second base station.

Optionally, the receiving unit 10 is further configured to: after the generation unit 12 generates the MNT measurement information according to the first measurement information obtained by the obtaining unit 11, and before the sending unit 13 sends the MNT measurement information generated by the generation unit 12 to the OSS, receive a first measurement instruction sent by the OSS, where the first measurement instruction is used to instruct to send the MNT measurement information generated by the generation unit 12 to the OSS.

The sending unit 13 is specifically configured to send the MNT measurement information generated by the generation unit 12 to the OSS according to the first measurement instruction received by the receiving unit 10.

Optionally, the MNT measurement information generated by the generation unit 12 includes at least one measurement information item of an identifier of the first cell, signal strength of the first cell, signal quality of the first cell, location information of the UE, a block bit error rate of a PDCCH, or a block bit error rate of a PDSCH.

This embodiment of the present invention provides a first base station. The first base station receives a service message sent by a UE, where the service message carries first measurement information, the first measurement information is information about a service measurement performed by the UE on a first cell, and the first cell is served by the first base station; the first base station obtains the first measurement information according to the service message; the first base station generates MNT measurement information according to the first measurement information; and finally, the first base station sends the MNT measurement information to an OSS. By using the solution, the first base station may finally generate the MNT measurement information by using the service message sent by the UE, and the first base station may send the MNT measurement information to the OSS, which helps the OSS determine a KPI degradation cause. Therefore, reporting overheads of the UE can be reduced, quality of an uplink service performed by the UE can be ensured, impact of reported measurement information on a network can be decreased, and network problem processing efficiency can be improved.

As shown in FIG. 10, this embodiment of the present invention provides an OSS 2. The OSS 2 corresponds to the method for determining a KPI degradation cause on the OSS side, and the OSS 2 may include:
a receiving unit 20, configured to receive MNT measurement information sent by a first base station, where the MNT measurement information is generated by the first base station according to first measurement information after the first base station receives a service message sent by a UE and obtains the first measurement information according to the service message, the service message carries the first measurement information, the first measurement information is information about a service measurement performed by the UE on a first cell, and the first cell is served by the first base station; and
a determining unit 21, configured to determine a KPI degradation cause according to the MNT measurement information received by the receiving unit 20.

Optionally, the receiving unit 20 is specifically configured to: when the determining unit 21 determines that the UE is handed over from the first cell to a second cell, receive the MNT measurement information sent by the second base station, where the MNT measurement information is sent by the first base station to the second base station, and the second cell is served by the second base station.

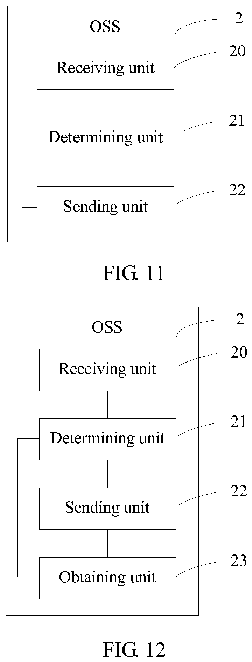

Optionally, as shown in FIG. 11, the OSS 2 further includes a sending unit 22.

The sending unit 22 is configured to: before the receiving unit 20 receives the MNT measurement information sent by the first base station, send a first measurement instruction to the first base station, where the first measurement instruction is used to instruct the first base station to send the MNT measurement information to the OSS.

It should be noted that, only after the sending unit 22 sends the first measurement instruction to the first base station, the receiving unit 20 can receive the MNT measurement information sent by the first base station. Therefore, the sending unit 22 is connected to the receiving unit 20.

Optionally, as shown in FIG. 11, the OSS 2 further includes a sending unit 22.

The sending unit 22 is configured to: before the receiving unit 20 receives the MNT measurement information sent by the second base station, send a second measurement instruction to the second base station, where the second measurement instruction is used to instruct the second base station to send the MNT measurement information to the OSS.

It should be noted that, only after the sending unit 22 sends the second measurement instruction to the second base station, the receiving unit 20 can receive the MNT measurement information sent by the second base station. Therefore, the sending unit 22 is connected to the receiving unit 20.

Optionally, as shown in FIG. 12, the OSS 2 further includes an obtaining unit 23.

The obtaining unit 23 is configured to: when the determining unit 21 determines that the UE is handed over from the first cell to a second cell, and fails in determining the KPI degradation cause according to the MNT measurement information received by the receiving unit, obtain an identifier of the second base station.

The determining unit 21 is further configured to determine an identifier of the second cell according to the identifier of the second base station obtained by the obtaining unit 23.

Optionally, the MNT measurement information received by the receiving unit 20 includes an identifier of the first cell.

The determining unit 21 is further configured to: after determining the identifier of the second cell according to the identifier of the second base station obtained by the obtaining unit 23, determine, according to the identifier of the first cell and the identifier of the second cell, whether the KPI degradation cause is a neighboring cell management fault.

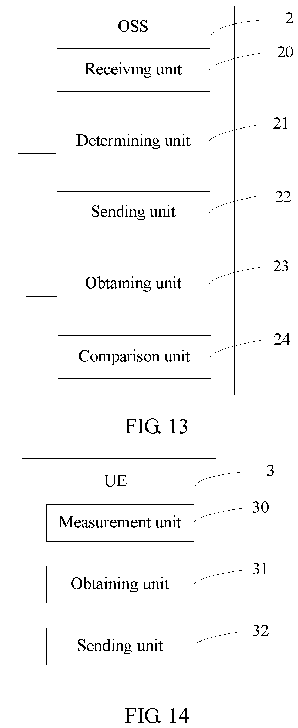

Optionally, as shown in FIG. 13, the OSS 2 further includes a comparison unit 24.

The comparison unit 24 is configured to compare each measurement information item in the MNT measurement information received by the receiving unit 20 with a preset threshold corresponding to each measurement information item.

The determining unit 21 is specifically configured to determine the KPI degradation cause according to a comparison result, obtained by means of comparison by the comparison unit 24, between each measurement information item and the preset threshold.

Optionally, the determining unit 21 is further specifically configured to: if it is obtained by means of comparison by the comparison unit 24 that at least one measurement information item in all measurement information items does not satisfy the preset threshold corresponding to the at least one measurement information item, determine that the KPI degradation cause is the at least one measurement information item.

Optionally, the MNT measurement information received by the receiving unit 20 includes at least one measurement information item of signal strength of the first cell, signal quality of the first cell, a block bit error rate of a PDCCH, or a block bit error rate of a PDSCH.

The determining unit 21 is further specifically configured to: if it is obtained by means of comparison by the comparison unit 24 that at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine that the KPI degradation cause is correspondingly at least one of: the signal strength of the first cell is weak, the signal quality of the first cell is poor, the block bit error rate of the PDCCH is high, or the block bit error rate of the PDSCH is high.

Optionally, the MNT measurement information received by the receiving unit 20 further includes location information of the UE.

The determining unit 21 is further specifically configured to: if it is obtained by means of comparison by the comparison unit 24 that at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine, according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

This embodiment of the present invention provides an OSS. The OSS receives MNT measurement information sent by a first base station, where the MNT measurement information is generated according to first measurement information after the first base station receives a service message sent by a UE and obtains the first measurement information according to the service message, the service message carries the first measurement information, the first measurement information is information about a service measurement performed by the UE on a first cell, and the first cell is served by the first base station; and the OSS determines a KPI degradation cause according to the MNT measurement information. By using the solution, the OSS may directly receive the MNT measurement information sent by the first base station, and determine the KPI degradation cause. Therefore, reporting overheads of the UE can be reduced, quality of an uplink service performed by the UE can be ensured, impact of reported measurement information on a network can be decreased, and network problem processing efficiency can be improved.

### Embodiment 6

As shown in FIG. 14, this embodiment of the present invention provides a UE 3. The UE 3 corresponds to another method for determining a KPI degradation cause on an OSS side. The UE 3 may include:
a measurement unit 30, configured to perform an MDT measurement on a first cell;
an obtaining unit 31, configured to obtain the MDT measurement information measured by the measurement unit 30, where the first cell is served by a first base station; and
a sending unit 32, configured to report the MDT measurement information obtained by the obtaining unit 31 to the first base station in a service interval, where the service interval is an interval of service data transmission performed by the UE.

Optionally, the sending unit 32 is specifically configured to send RRC signaling to the first base station in the service interval, where the RRC signaling carries the MDT measurement information obtained by the obtaining unit 31.

Optionally, the sending unit 32 is specifically configured to send uplink data to the first base station in the service interval, where the uplink data carries the MDT measurement information obtained by the obtaining unit 31.

Optionally, the service interval includes an uplink interval of a CS service and a small packet interval of a PS service.

This embodiment of the present invention provides a UE. The UE performs an MDT measurement on a first cell, and obtains MDT measurement information, where the first cell is served by a first base station; and the UE reports the MDT measurement information to the first base station in a service interval, where the service interval is an interval of service data transmission performed by the UE. By using the solution, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

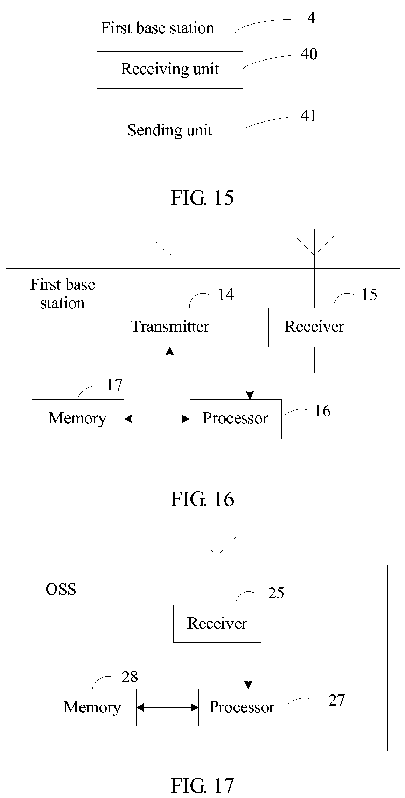

As shown in FIG. 15, this embodiment of the present invention further provides a first base station 4. The first base station 4 corresponds to another method for determining a KPI degradation cause on a base station side. The first base station 4 may include:
a receiving unit 40, configured to receive MDT measurement information that is reported by a UE in a service interval, where the service interval is an interval of service data transmission performed by the UE, the MDT measurement information is information about an MDT measurement performed by the UE on a first cell, and the first cell is served by the first base station; and
a sending unit 41, configured to send the MDT measurement information received by the receiving unit 40 to an OSS.

Optionally, the service interval includes an uplink interval of a CS service and a small packet interval of a PS service.

This embodiment of the present invention provides a first base station. The first base station receives MDT measurement information that is reported by a UE in a service interval, where the service interval is an interval of service data transmission performed by the UE, the MDT measurement information is information about an MDT measurement performed by the UE on a first cell, and the first cell is served by the first base station; and the first base station sends the MDT measurement information to an OSS. By using the solution, the MDT measurement information received by the first base station is reported by the UE in the service interval. This manner does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

### Embodiment 7

As shown in FIG. 16, this embodiment of the present invention provides a first base station. The first base station corresponds to the method for determining a KPI degradation cause on the base station side. The first base station may include a transmitter 14, a receiver 15, a processor 16, and a memory 17, where all of the transmitter 14, the receiver 15, and the memory 17 are connected to the processor 16. For example, all of the transmitter 14, the receiver 15, and the memory 17 may be connected to the processor 16 by using a bus.

The receiver 15 and the transmitter 14 may be integrated to form a transceiver.

The memory 17 is configured to store executable program code, and the program code includes a computer operation instruction. The memory 18 may include a high-speed RAM memory, and may further include a non-volatile memory (non-volatile memory), such as at least one magnetic disk memory.

The processor 16 may be a central processing unit, or an application-specific integrated circuit, or is configured as one or more integrated circuits that implement this embodiment of the present invention.

Specifically, the receiver 15 may be configured to receive a service message sent by UE, where the service message carries first measurement information, the first measurement information is information about a service measurement performed by the UE on a first cell, and the first cell is served by the first base station. The processor 16 may be configured to obtain the first measurement information according to the service message received by the receiver 15, and generate MNT measurement information according to the first measurement information. The transmitter 14 may be configured to send the MNT measurement information generated by the processor 16 to an OSS, where the MNT measurement information is used by the OSS for determining a KPI degradation cause. The memory 17 may be configured to store software code of the first measurement information, software code of the MNT measurement information, and a software program for controlling the first base station to implement the foregoing process, so that the processor 16 implements the foregoing process by executing the foregoing software program and invoking the foregoing software code.

Optionally, when the first base station determines that the UE is handed over from the first cell to a second cell, the second cell is served by a second base station, where
the transmitter 14 is specifically configured to send the MNT measurement information generated by the processor 16 to the second base station, so that the second base station sends the MNT measurement information to the OSS.

Optionally, the transmitter 14 is further specifically configured to send the MNT measurement information generated by the processor 16 to the second base station through an X2 interface.

Optionally, the transmitter 14 is further specifically configured to send the MNT measurement information generated by the processor 16 to the second base station through an S1 interface.

Optionally, the transmitter 14 is further specifically configured to send the MNT measurement information generated by the processor 16 to a core network device through an S1 interface, and the core network device sends the MNT measurement information to the second base station through an S1 interface of the core network device, where the core network device separately provides a service for the first base station and the second base station.

Optionally, the receiver 15 is further configured to: after the processor 16 generates the MNT measurement information according to the first measurement information, and before the transmitter 14 sends the MNT measurement information generated by the processor 16 to the OSS, receive a first measurement instruction sent by the OSS, where the first measurement instruction is used to instruct to send the MNT measurement information generated by the processor 16 to the OSS.

The transmitter 14 is specifically configured to send the MNT measurement information generated by the processor 16 to the OSS according to the first measurement instruction received by the receiver 15.

Optionally, the MNT measurement information generated by the processor 16 includes at least one measurement information item of an identifier of the first cell, signal strength of the first cell, signal quality of the first cell, location information of the UE, a block bit error rate of a PDCCH, or a block bit error rate of a PDSCH.

This embodiment of the present invention provides a first base station. The first base station receives a service message sent by UE, where the service message carries first measurement information, the first measurement information is information about a service measurement performed by the UE on a first cell, and the first cell is served by the first base station; the first base station obtains the first measurement information according to the service message; the first base station generates MNT measurement information according to the first measurement information; and finally, the first base station sends the MNT measurement information to an OSS. By using the solution, the first base station may finally generate the MNT measurement information by using the service message sent by the UE, and the first base station may send the MNT measurement information to the OSS, which helps the OSS determine a KPI degradation cause. Therefore, reporting overheads of the UE can be reduced, quality of an uplink service performed by the UE can be ensured, impact of reported measurement information on a network can be decreased, and network problem processing efficiency can be improved.

As shown in FIG. 17, this embodiment of the present invention provides an OSS. The OSS corresponds to the method for determining a KPI degradation cause on the OSS side. The OSS may include: a receiver 25, a processor 27, and a memory 28, where both the receiver 25 and the memory 28 are connected to the processor 27. For example, both the receiver 25 and the memory 28 may be connected to the processor 27 by using a bus.

The memory 28 is configured to store executable program code, and the program code includes a computer operation instruction. The memory 28 may include a high-speed RAM memory, and may further include a non-volatile memory, such as at least one magnetic disk memory.

The processor 27 may be a central processing unit, or an application-specific integrated circuit, or is configured as one or more integrated circuits that implement this embodiment of the present invention.

Specifically, the receiver 25 may be configured to receive MNT measurement information sent by a first base station, where the MNT measurement information is generated by the first base station according to first measurement information after the first base station receives a service message sent by a UE and obtains the first measurement information according to the service message, the service message carries the first measurement information, the first measurement information is information about a service measurement performed by the UE on a first cell, and the first cell is served by the first base station. The processor 27 may be configured to determine a KPI degradation cause according to the MNT measurement information received by the receiver 25. The memory 28 may be configured to store software code of the MNT measurement information and a software program for controlling the OSS to implement the foregoing process, so that the processor 27 implements the foregoing process by executing the foregoing software program and invoking the foregoing software code.

Optionally, the receiver 25 is specifically configured to: when the processor 27 determines that the UE is handed over from the first cell to a second cell, receive the MNT measurement information sent by the second base station, where the MNT measurement information is sent by the first base station to the second base station, and the second cell is served by the second base station.

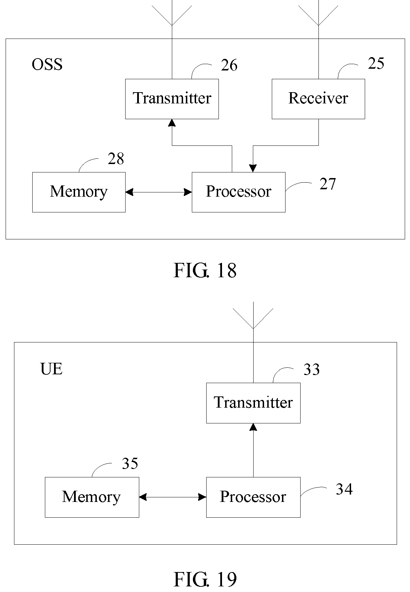

Optionally, as shown in FIG. 18, the OSS 2 further includes a transmitter 26, where the transmitter 26 is connected to the processor 27. The receiver 25 and the transmitter 26 may be integrated to form a transceiver.

The transmitter 26 is configured to: before the receiver 25 receives the MNT measurement information sent by the first base station, send a first measurement instruction to the first base station, where the first measurement instruction is used to instruct the first base station to send the MNT measurement information to the OSS.

Optionally, the transmitter 26 is configured to: before the receiver 25 receives the MNT measurement information sent by the second base station, send a second measurement instruction to the second base station, where the second measurement instruction is used to instruct the second base station to send the MNT measurement information to the OSS.

Optionally, the processor 27 is further configured to: when determining that the UE is handed over from the first cell to the second cell, and failing in determining the KPI degradation cause according to the MNT measurement information, obtain an identifier of the second base station, and determine an identifier of the second cell according to the identifier of the second base station.

Optionally, the MNT measurement information received by the receiver 25 includes an identifier of the first cell.

The processor 27 is further configured to: after determining the identifier of the second cell according to the identifier of the second base station, determine, according to the identifier of the first cell and the identifier of the second cell, whether the KPI degradation cause is a neighboring cell management fault.

Optionally, the processor 27 is further configured to compare each measurement information item in the MNT measurement information received by the receiver 25 with a preset threshold corresponding to each measurement information item, and determine the KPI degradation cause according to a comparison result between each measurement information item and the preset threshold.

Optionally, the processor 27 is specifically configured to: if at least one measurement information item in all measurement information items does not satisfy the preset threshold corresponding to the at least one measurement information item, determine that the KPI degradation cause is the at least one measurement information item.

Optionally, the MNT measurement information received by the receiver 25 includes at least one measurement information item of signal strength of the first cell, signal quality of the first cell, a block bit error rate of a PDCCH, or a block bit error rate of a PDSCH.

The processor 27 is further specifically configured to: if at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine that the KPI degradation cause is correspondingly at least one of: the signal strength of the first cell is weak, the signal quality of the first cell is poor, the block bit error rate of the PDCCH is high, or the block bit error rate of the PDSCH is high.

Optionally, the MNT measurement information received by the receiver 25 further includes location information of the UE.

The processor 27 is further specifically configured to: if at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine, according to the location information of the UE, that the KPI degradation cause is correspondingly at least one of: the signal strength of the first cell is weak in a location of the UE, the signal quality of the first cell is poor in the location of the UE, the block bit error rate of the PDCCH is high, or the block bit error rate of the PDSCH is high.

### Embodiment 8

As shown in FIG. 19, this embodiment of the present invention provides a UE. The UE corresponds to the another method for determining a KPI degradation cause on the UE side. The UE may include: a transmitter 33, a processor 34, and a memory 35, where both the transmitter 33 and the memory 35 are connected to the processor 34. For example, both the transmitter 33 and the memory 35 may be connected to the processor 34 by using a bus.

The memory 35 is configured to store executable program code, and the program code includes a computer operation instruction. The memory 35 may include a high-speed RAM memory, and may further include a non-volatile memory, such as at least one magnetic disk memory.

The processor 34 may be a central processing unit, or an application-specific integrated circuit, or is configured as one or more integrated circuits that implement this embodiment of the present invention.

Specifically, the processor 34 may be configured to perform an MDT measurement on a first cell, and obtain the MDT measurement information, where the first cell is served by a first base station. The transmitter 33 is configured to report the MDT measurement information obtained by the processor 34 to the first base station in a service interval, where the service interval is an interval of service data transmission performed by the UE. The memory 35 may be configured to store software code of the MDT measurement information and a software program for controlling the UE to implement the foregoing process, so that the processor 34 implements the foregoing process by executing the foregoing software program and invoking the foregoing software code.

Optionally, the transmitter 33 is specifically configured to send RRC signaling to the first base station in the service interval, where the RRC signaling carries the MDT measurement information obtained by the processor 34.

Optionally, the transmitter 33 is specifically configured to send uplink data to the first base station in the service interval, where the uplink data carries the MDT measurement information obtained by the processor 34.

Optionally, the service interval includes an uplink interval of a CS service and a small packet interval of a PS service.

This embodiment of the present invention provides a UE. The UE performs an MDT measurement on a first cell, and obtains MDT measurement information, where the first cell is served by a first base station; and the UE reports the MDT measurement information to the first base station in a service interval, where the service interval is an interval of service data transmission performed by the UE. By using the solution, a manner in which the UE reports the MDT measurement information in the service interval does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

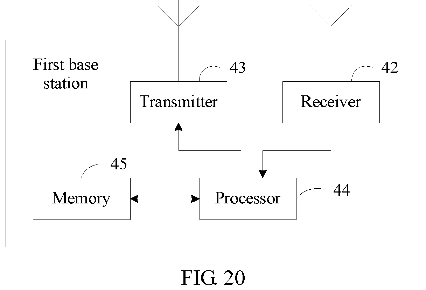

As shown in FIG. 20, this embodiment of the present invention further provides a first base station. The first base station corresponds to the another method for determining a KPI degradation cause on the base station side. The first base station may include a receiver 42, a transmitter 43, a processor 44, and a memory 45, where all of the receiver 42, the transmitter 43, and the memory 45 are connected to the processor 44. For example, both the transmitter 43 and the memory 45 may be connected to the processor 44 by using a bus.

The memory 45 is configured to store executable program code, and the program code includes a computer operation instruction. The memory 45 may include a high-speed RAM memory, and may further include a non-volatile memory, such as at least one magnetic disk memory.

The processor 44 may be a central processing unit, or an application-specific integrated circuit, or is configured as one or more integrated circuits that implement this embodiment of the present invention.

Specifically, the processor 44 may be configured to instruct the receiver 42 to receive MDT measurement information that is reported by a UE in a service interval, where the service interval is an interval of service data transmission performed by the UE, the MDT measurement information is information about an MDT measurement performed by the UE on a first cell, and the first cell is served by the first base station. The processor 44 may be configured to instruct the transmitter 43 to send the MDT measurement information received by the receiver 42 to an OSS. The memory 45 may be configured to store software code of the MDT measurement information and a software program for controlling the first base station to implement the foregoing process, so that the processor 44 implements the foregoing process by executing the foregoing software program and invoking the foregoing software code.

Optionally, the service interval includes an uplink interval of a CS service and a small packet interval of a PS service.

This embodiment of the present invention provides a first base station. The first base station receives MDT measurement information that is reported by UE in a service interval, where the service interval is an interval of service data transmission performed by the UE, the MDT measurement information is information about an MDT measurement performed by the UE on a first cell, and the first cell is served by the first base station; and the first base station sends the MDT measurement information to an OSS. By using the solution, the MDT measurement information received by the first base station is reported by the UE in the service interval. This manner does not occupy a channel resource and time that are used by the UE for performing an uplink service, and the UE does not report a large amount of MDT measurement information at a time in the service interval. Therefore, reporting overheads of the UE can be reduced, quality of the uplink service performed by the UE can be ensured, impact of reported measurement information on a network can be decreased, and network problem processing efficiency can be improved.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for determining a key performance indicator, KPI, degradation cause in a wireless communications system, the system comprising a first base station, a second base station, a user equipment, UE, and an operation support system, OSS, the method comprising:
receiving (S101), by the first base station, a service message sent by the UE, wherein the service message carries first measurement information, the first measurement information is information about a service measurement performed by the UE on a first cell, and the first cell is served by the first base station;
obtaining (S102), by the first base station, the first measurement information according to the service message;
generating (S103), by the first base station, minimized network test, MNT, measurement information according to the first measurement information;
determining, by the first base station, that the UE is handed over from the first cell to a second cell; and
sending (S104), by the first base station, the MNT measurement information to a second base station, and sending by the second base station the MNT measurement information to the OSS, wherein the MNT measurement information is used by the OSS for determining a key performance indicator, KPI, degradation cause and wherein the second cell is served by the second base station.

2. The method according to claim 1, wherein
the MNT measurement information comprises at least one measurement information item of an identifier of the first cell, signal strength of the first cell, signal quality of the first cell, location information of the UE, a block bit error rate of a physical downlink control channel PDCCH, or a block bit error rate of a physical downlink shared channel PDSCH.

3. The method according to claim 1, wherein when the OSS fails in determining the KPI degradation cause according to the MNT measurement information, the method further comprises:
obtaining, by the OSS, an identifier of the second base station;
determining, by the OSS, an identifier of the second cell according to the identifier of the second base station; and
determining, by the OSS according to the identifier of the first cell and the identifier of the second cell, whether the KPI degradation cause is a neighboring cell management fault.

4. The method according to claim 1 or claim 3, wherein the determining, by the OSS, the KPI degradation cause according to the MNT measurement information specifically comprises:
comparing, by the OSS, each measurement information item in the MNT measurement information with a preset threshold corresponding to the measurement information item; and
determining, by the OSS, the KPI degradation cause according to a comparison result between each measurement information item and the preset threshold.

5. The method according to claim 4, wherein the determining, by the OSS, the KPI degradation cause according to a comparison result between each measurement information and the preset threshold specifically comprises:
determining, by the OSS if at least one measurement information item in all measurement information items does not satisfy the preset threshold corresponding to the at least one measurement information item, that the KPI degradation cause is the at least one measurement information item.

6. The method according to claim 5, wherein the MNT measurement information comprises at least one measurement information item of signal strength of the first cell, signal quality of the first cell, a block bit error rate of a physical downlink control channel, PDCCH, or a block bit error rate of a physical downlink shared channel, PDSCH, wherein
the determining, by the OSS if at least one measurement information item in all measurement information items does not satisfy the preset threshold corresponding to the at least one measurement information item, that the KPI degradation cause is the at least one measurement information item specifically comprises:
determining, by the OSS if at least one measurement information item of the signal strength of the first cell, the signal quality of the first cell, the block bit error rate of the PDCCH, or the block bit error rate of the PDSCH does not satisfy the preset threshold corresponding to the at least one measurement information item, that the KPI degradation cause is correspondingly at least one of: the signal strength of the first cell is weak, the signal quality of the first cell is poor, the block bit error rate of the PDCCH is high, or the block bit error rate of the PDSCH is high.

7. A system for determining a key performance indicator, KPI, degradation cause, the system comprising a first base station, a second base station, a user equipment, UE, and an operation support system, OSS, wherein; the first base station (1), comprises:
a receiving unit (10), configured to receive a service message sent by the UE, wherein the service message carries first measurement information, the first measurement information is information about a service measurement performed by the UE on a first cell, and the first cell is served by the first base station;
an obtaining unit (11), configured to obtain the first measurement information according to the service message received by the receiving unit;
a generation unit (12), configured to generate minimized network test, MNT, measurement information according to the first measurement information obtained by the obtaining unit; and
a sending unit (13), configured to send the MNT measurement information generated by the generation unit to the operation support system, OSS, wherein the MNT measurement information is used by the OSS for determining a key performance indicator, KPI, degradation cause, wherein when the first base station determines that the UE is handed over from the first cell to a second cell, the sending unit (13) is configured to send the MNT measurement information generated by the generation unit to the second base station, and the second base station is configured to send the MNT measurement information to the OSS, wherein the second cell is served by the second base station;
and wherein the operation support system, OSS (2), comprises:
a receiving unit (20), configured to receive minimized network test, MNT, measurement information sent by the first base station, wherein the MNT measurement information is generated by the first base station according to first measurement information after the first base station receives a service message sent by the user equipment UE and obtains the first measurement information according to the service message, the service message carries the first measurement information, the first measurement information is information about a service measurement performed by the UE on a first cell, and the first cell is served by the first base station; and
a determining unit (21), configured to determine a key performance indicator, KPI, degradation cause according to the MNT measurement information received by the receiving unit, wherein
the receiving unit (20) is specifically configured to: when the determining unit determines that the UE is handed over from the first cell to a second cell, receive the MNT measurement information sent by the second base station, wherein the MNT measurement information is sent by the first base station to the second base station, and the second cell is served by the second base station.

8. The system according to claim 7, wherein the OSS further comprises an obtaining unit (23), wherein
the obtaining unit (23) is configured to: when the determining unit (21) determines that the UE is handed over from the first cell to the second cell, and fails in determining the KPI degradation cause according to the MNT measurement information received by the receiving unit (20), obtain an identifier of the second base station; and
the determining unit (21) is further configured to determine an identifier of the second cell according to the identifier of the second base station obtained by the obtaining unit; and determine, according to the identifier of the first cell and the identifier of the second cell, whether the KPI degradation cause is a neighboring cell management fault.

9. The system according to any one of claims 7 to 8, wherein the OSS further comprises a comparison unit (24), wherein
the comparison unit (24) is configured to compare each measurement information item in the MNT measurement information received by the receiving unit (20) with a preset threshold corresponding to the measurement information item; and
the determining unit (21) is specifically configured to determine the KPI degradation cause according to a comparison result, obtained by means of comparison by the comparison unit (24), between each measurement information item and the preset threshold.

10. The system according to claim 9, wherein the determining unit (21) is further specifically configured to: if it is obtained by means of comparison by the comparison unit (24) that at least one measurement information item in all measurement information items does not satisfy the preset threshold corresponding to the at least one measurement information item, determine that the KPI degradation cause is the at least one measurement information items.

11. The system according to claim 10, wherein the MNT measurement information received by the receiving unit (20) comprises at least one measurement information item of signal strength of the first cell, signal quality of the first cell, a block bit error rate of a physical downlink control channel, PDCCH, or a block bit error rate of a physical downlink shared channel, PDSCH, wherein
the determining unit (21) is further specifically configured to: if it is obtained by means of comparison by the comparison unit that at least one measurement information item of the signal strength of the first cell, the signal quality of the first cell, the block bit error rate of the PDCCH, or the block bit error rate of the PDSCH does not satisfy the preset threshold corresponding to the at least one measurement information item, determine that the KPI degradation cause is correspondingly at least one of: the signal strength of the first cell is weak, the signal quality of the first cell is poor, the block bit error rate of the PDCCH is high, or the block bit error rate of the PDSCH is high.

## Patentansprüche

1. Verfahren zum Bestimmen einer Ursache einer Verschlechterung einer Schlüsselleistungskennzahl, KPI, in einem Funkkommunikationssystem, wobei das System eine erste Basisstation, eine zweite Basisstation, ein Nutzergerät, UE, und ein Betriebsunterstützungssystem, OSS, umfasst, wobei das Verfahren Folgendes umfasst:
durch die erste Basisstation erfolgendes Empfangen (S101) einer durch das UE gesendeten Dienstnachricht,
wobei die Dienstnachricht erste Messungsinformationen enthält, es sich bei den ersten Messungsinformationen um Informationen über eine durch das UE an einer ersten Zelle vorgenommene Dienstmessung handelt und die erste Zelle durch die erste Basisstation versorgt wird,
durch die erste Basisstation erfolgendes Beziehen (S102) der ersten Messungsinformationen gemäß der Dienstnachricht,
durch die erste Basisstation erfolgendes Erzeugen (S103) von Minimalnetzprüfungs-, MNT-, Messungsinformationen gemäß den ersten Messungsinformationen,
durch die erste Basisstation erfolgendes Bestimmen, dass das UE von der ersten Zelle an eine zweite Zelle übergeben wird, und
durch die erste Basisstation erfolgendes Senden (S104) der MNT-Messungsinformationen an eine zweite Basisstation und durch die zweite Basisstation erfolgendes Senden der MNT-Messungsinformationen an das OSS, wobei die MNT-Messungsinformationen durch das OSS zum Bestimmen einer Ursache einer Verschlechterung einer Schlüsselleistungskennzahl, KPI, verwendet werden und wobei die zweite Zelle durch die zweite Basisstation versorgt wird.

2. Verfahren nach Anspruch 1, wobei
die MNT-Messungsinformationen mindestens ein Messungsinformationselement einer Kennung der ersten Zelle, einer Signalstärke der ersten Zelle, einer Signalqualität der ersten Zelle, von Standortinformationen des UEs, einer Blockbitfehlerrate eines Physical Downlink Control Channel PDCCH oder einer Blockbitfehlerrate eines Physical Downlink Shared Channel PDSCH umfassen.

3. Verfahren nach Anspruch 1, wobei, wenn das OSS beim Bestimmen der Ursache der KPI-Verschlechterung gemäß den MNT-Messungsinformationen versagt, das Verfahren ferner Folgendes umfasst:
durch das OSS erfolgendes Beziehen einer Kennung der zweiten Basisstation,
durch das OSS erfolgendes Bestimmen einer Kennung der zweiten Zelle gemäß der Kennung der zweiten Basisstation und
durch das OSS gemäß der Kennung der ersten Zelle und der Kennung der zweiten Zelle erfolgendes Bestimmen, ob es sich bei der Ursache der KPI-Verschlechterung um einen Verwaltungsfehler einer benachbarten Zelle handelt.

4. Verfahren nach Anspruch 1 oder Anspruch 3, wobei das durch das OSS erfolgende Bestimmen der Ursache der KPI-Verschlechterung gemäß den MNT-Messungsinformationen insbesondere Folgendes umfasst:
durch das OSS erfolgendes Vergleichen jedes Messungsinformationselements in den MNT-Messungsinformationen mit einem dem Messungsinformationselement entsprechenden voreingestellten Schwellenwert und
durch das OSS erfolgendes Bestimmen der Ursache der KPI-Verschlechterung gemäß einem Vergleichsergebnis zwischen jedem Messungsinformationselement und dem voreingestellten Schwellenwert.

5. Verfahren nach Anspruch 4, wobei das durch das OSS erfolgende Bestimmen der Ursache der KPI-Verschlechterung gemäß einem Vergleichsergebnis zwischen jeder Messungsinformation und dem voreingestellten Schwellenwert insbesondere Folgendes umfasst:
in dem Fall, dass mindestens ein Messungsinformationselement unter allen Messungsinformationselementen den dem mindestens einen Messungsinformationselement entsprechenden voreingestellten Schwellenwert nicht erfüllt, durch das OSS erfolgendes Bestimmen, dass es sich bei der Ursache der KPI-Verschlechterung um das mindestens eine Messungsinformationselement handelt.

6. Verfahren nach Anspruch 5, wobei die MNT-Messungsinformationen mindestens ein Messungsinformationselement einer Signalstärke der ersten Zelle, einer Signalqualität der ersten Zelle, einer Blockbitfehlerrate eines Physical Downlink Control Channel, PDCCH, oder einer Blockbitfehlerrate eines Physical Downlink Shared Channel, PDSCH, umfassen, wobei
das in dem Fall, dass mindestens ein Messungsinformationselement unter allen Messungsinformationselementen den dem mindestens einen Messungsinformationselement entsprechenden voreingestellten Schwellenwert nicht erfüllt, durch das OSS erfolgende Bestimmen, dass es sich bei der Ursache der KPI-Verschlechterung um das mindestens eine Messungsinformationselement handelt, insbesondere Folgendes umfasst:
in dem Fall, dass mindestens ein Messungsinformationselement der Signalstärke der ersten Zelle, der Signalqualität der ersten Zelle, der Blockbitfehlerrate des PDCCH oder der Blockbitfehlerrate des PDSCH den dem mindestens einen Messungsinformationselement entsprechenden voreingestellten Schwellenwert nicht erfüllt, durch das OSS erfolgendes Bestimmen, dass es sich bei der Ursache der KPI-Verschlechterung entsprechend um mindestens eines der Folgenden handelt: die Signalstärke der ersten Zelle ist schwach, die Signalqualität der ersten Zelle ist schlecht, die Blockbitfehlerrate des PDCCH ist hoch, oder die Blockbitfehlerrate des PDSCH ist hoch.

7. System zum Bestimmen einer Ursache einer Verschlechterung einer Schlüsselleistungskennzahl, KPI, wobei das System eine erste Basisstation, eine zweite Basisstation, ein Nutzergerät, UE, und ein Betriebsunterstützungssystem, OSS, umfasst, wobei
die erste Basisstation (1) Folgendes umfasst:
eine Empfangseinheit (10), die konfiguriert ist, eine durch das UE gesendete Dienstnachricht zu empfangen, wobei die Dienstnachricht erste Messungsinformationen enthält, es sich bei den ersten Messungsinformationen um Informationen über eine durch das UE an einer ersten Zelle vorgenommene Dienstmessung handelt und die erste Zelle durch die erste Basisstation versorgt wird, eine Bezugseinheit (11), die konfiguriert ist, die ersten Messungsinformationen gemäß der durch die Empfangseinheit empfangenen Dienstnachricht zu beziehen,
eine Erzeugungseinheit (12), die konfiguriert ist, Minimalnetzprüfungs-, MNT-, Messungsinformationen gemäß den durch die Bezugseinheit bezogenen ersten Messungsinformationen zu erzeugen, und
eine Sendeeinheit (13), die konfiguriert ist, die durch die Erzeugungseinheit erzeugten MNT-Messungsinformationen an das Betriebsunterstützungssystem, OSS, zu senden, wobei die MNT-Messungsinformationen durch das OSS zum Bestimmen einer Ursache einer Verschlechterung einer Schlüsselleistungskennzahl, KPI, verwendet werden, wobei, wenn die erste Basisstation bestimmt, dass das UE von der ersten Zelle an eine zweite Zelle übergeben wird, die Sendeeinheit (13) konfiguriert ist, die durch die Erzeugungseinheit erzeugten MNT-Messungsinformationen an die zweite Basisstation zu senden, und die zweite Basisstation konfiguriert ist, die MNT-Messungsinformationen an das OSS zu senden, wobei die zweite Zelle durch die zweite Basisstation versorgt wird,
und wobei das Betriebsunterstützungssystem, OSS (2), Folgendes umfasst:
eine Empfangseinheit (20), die konfiguriert ist, durch die erste Basisstation gesendete Mindestnetzprüfungs-, MNT-, Messungsinformationen zu empfangen, wobei die MNT-Messungsinformationen durch die erste Basisstation gemäß ersten Messungsinformationen erzeugt werden, nachdem die erste Basisstation eine durch das Nutzergerät UE gesendete Dienstnachricht empfängt und die ersten Messungsinformationen gemäß der Dienstnachricht bezieht, die Dienstnachricht die ersten Messungsinformationen enthält, es sich bei den ersten Messungsinformationen um Informationen über eine durch das UE an einer ersten Zelle vorgenommene Dienstmessung handelt und die erste Zelle durch die erste Basisstation versorgt wird, und
eine Bestimmungseinheit (21), die konfiguriert ist, eine Ursache einer Verschlechterung einer Schlüsselleistungskennzahl, KPI, gemäß den durch die Empfangseinheit empfangenen MNT-Messungsinformationen zu bestimmen, wobei die Empfangseinheit (20) insbesondere konfiguriert ist, um: dann, wenn die Bestimmungseinheit bestimmt, dass das UE von der ersten Zelle an eine zweite Zelle übergeben wird, die durch die zweite Basisstation gesendeten MNT-Messungsinformationen zu empfangen, wobei die MNT-Messungsinformationen durch die erste Basisstation an die zweite Basisstation gesendet werden und die zweite Zelle durch die zweite Basisstation versorgt wird.

8. System nach Anspruch 7, wobei das OSS ferner eine Bezugseinheit (23) umfasst, wobei
die Bezugseinheit (23) konfiguriert ist, um: dann, wenn die Bestimmungseinheit (21) bestimmt, dass das UE von der ersten Zelle an die zweite Zelle übergeben wird, und beim Bestimmen der Ursache der KPI-Verschlechterung gemäß den durch die Empfangseinheit (20) empfangenen MNT-Messungsinformationen versagt, eine Kennung der zweiten Basisstation zu beziehen, und
die Bestimmungseinheit (21) ferner konfiguriert ist, eine Kennung der zweiten Zelle gemäß der durch die Bezugseinheit bezogenen Kennung der zweiten Basisstation zu bestimmen und gemäß der Kennung der ersten Zelle und der Kennung der zweiten Zelle zu bestimmen, ob es sich bei der Ursache der KPI-Verschlechterung um einen Verwaltungsfehler einer benachbarten Zelle handelt.

9. System nach einem der Ansprüche 7 bis 8, wobei das OSS ferner eine Vergleichseinheit (24) umfasst, wobei
die Vergleichseinheit (24) konfiguriert ist, jedes Messungsinformationselement in den durch die Empfangseinheit (20) empfangenen MNT-Messungsinformationen mit einem dem Messungsinformationselement entsprechenden voreingestellten Schwellenwert zu vergleichen, und
die Bestimmungseinheit (21) insbesondere konfiguriert ist, gemäß einem mittels Vergleichs durch die Vergleichseinheit (24) bezogenen Vergleichsergebnis zwischen jedem Messungsinformationselement und dem voreingestellten Schwellenwert die Ursache der KPI-Verschlechterung zu bestimmen.

10. System nach Anspruch 9, wobei
die Bestimmungseinheit (21) ferner insbesondere konfiguriert ist, um: in dem Fall, dass mittels Vergleichs durch die Vergleichseinheit (24) erhalten wird, dass mindestens ein Messungsinformationselement unter allen Messungsinformationselementen den dem mindestens einen Messungsinformationselement entsprechenden voreingestellten Schwellenwert nicht erfüllt, zu bestimmen, dass es sich bei der Ursache der KPI-Verschlechterung um das mindestens eine Messungsinformationselement handelt.

11. System nach Anspruch 10, wobei die durch die Empfangseinheit (20) empfangenen MNT-Messungsinformationen mindestens ein Messungsinformationselement einer Signalstärke der ersten Zelle, einer Signalqualität der ersten Zelle, einer Blockbitfehlerrate eines Physical Downlink Control Channel, PDCCH, oder einer Blockbitfehlerrate eines Physical Downlink Shared Channel, PDSCH, umfassen, wobei
die Bestimmungseinheit (21) ferner insbesondere konfiguriert ist, um: in dem Fall, dass mittels Vergleichs durch die Vergleichseinheit erhalten wird, dass mindestens ein Messungsinformationselement der Signalstärke der ersten Zelle, der Signalqualität der ersten Zelle, der Blockbitfehlerrate des PDCCH oder der Blockbitfehlerrate des PDSCH den dem mindestens einen Messungsinformationselement entsprechenden voreingestellten Schwellenwert nicht erfüllt, zu bestimmen, dass es sich bei der Ursache der KPI-Verschlechterung entsprechend um mindestens eines der Folgenden handelt: die Signalstärke der ersten Zelle ist schwach, die Signalqualität der ersten Zelle ist schlecht, die Blockbitfehlerrate des PDCCH ist hoch, oder die Blockbitfehlerrate des PDSCH ist hoch.

## Revendications

1. Procédé pour déterminer une raison de descente d'un indicateur de performances clés, KPI, dans un système de communication sans fil, le système comprenant une première station de base, une deuxième station de base, un équipement utilisateur, UE, et un système de support d'opération, OSS, le procédé comprenant :
la réception (S101), par la première station de base, d'un message de service envoyé par l'UE,
le message de service portant des premières informations de mesure, les premières informations de mesure étant des informations concernant une mesure de service réalisée par l'UE sur une première cellule, et la première cellule étant desservie par la première station de base ;
l'obtention (S102), par la première station de base, de premières informations de mesure en fonction du message de service ;
la génération (S103), par la première station de base, d'informations de mesure de test de réseau minimisé, MNT, en fonction des premières informations de mesure ;
la détermination, par la première station de base, que l'UE est transféré de la première cellule à une deuxième cellule ; et
l'envoi (S104), par la première station de base, des informations de mesure MNT à une deuxième station de base, et l'envoi par la deuxième station de base des informations de mesure MNT à l'OSS, les informations de mesure MNT étant utilisées par l'OSS pour déterminer une raison de descente d'un indicateur de performances clés, KPI, et la deuxième cellule étant desservie par la deuxième station de base.

2. Procédé selon la revendication 1,
les informations de mesure MNT comprenant au moins un élément d'informations de mesure parmi un identifiant de la première cellule, l'intensité du signal de la première cellule, la qualité du signal de la première cellule, des informations de localisation de l'UE, un taux d'erreur binaire de bloc d'un canal de commande physique en liaison descendante PDCCH ou un taux d'erreur binaire de bloc d'un canal partagé physique en liaison descendante PDSCH.

3. Procédé selon la revendication 1, lorsque l'OSS ne parvient pas à déterminer la raison de descente du KPI en fonction des informations de mesure MNT, le procédé comprenant en outre :
l'obtention, par l'OSS, d'un identifiant de la deuxième station de base ;
la détermination, par l'OSS, d'un identifiant de la deuxième cellule en fonction de l'identifiant de la deuxième station de base ; et
la détermination, par l'OSS en fonction de l'identifiant de la première cellule et de l'identifiant de la deuxième cellule, si la raison de descente du KPI est un défaut de gestion de cellule de voisinage.

4. Procédé selon la revendication 1 ou la revendication 3, la détermination, par l'OSS, de la raison de descente du KPI en fonction des informations de mesure MNT comprenant spécifiquement :
la comparaison, par l'OSS, de chaque élément d'informations de mesure dans les informations de mesure MNT avec un seuil prédéfini correspondant à l'élément d'informations de mesure ; et
la détermination, par l'OSS, de la raison de descente du KPI en fonction d'un résultat de comparaison entre chaque élément d'informations de mesure et du seuil prédéfini.

5. Procédé selon la revendication 4, la détermination, par l'OSS, de la raison de descente du KPI en fonction d'un résultat de comparaison entre chacune des informations de mesure et le seuil prédéfini comprenant spécifiquement :
la détermination, par l'OSS, si au moins un élément d'informations de mesure dans tous les éléments d'informations de mesure ne satisfait pas au seuil prédéfini correspondant à l'au moins un élément d'informations de mesure, que la raison de descente du KPI est l'au moins un élément d'informations de mesure.

6. Procédé selon la revendication 5, les informations de mesure MNT comprenant au moins un élément d'informations de mesure de l'intensité du signal de la première cellule, de la qualité du signal de la première cellule, d'un taux d'erreur binaire de bloc d'un canal de commande physique en liaison descendante, PDCCH, ou d'un taux d'erreur binaire de bloc d'un canal partagé physique en liaison descendante, PDSCH,
la détermination par l'OSS si au moins un élément d'informations de mesure dans tous les éléments d'informations de mesure ne satisfait pas au seuil prédéfini correspondant à l'au moins un élément d'informations de mesure, que la raison de descente du KPI est l'au moins un élément d'informations de mesure comprenant spécifiquement :
la détermination, par l'OSS si au moins un élément d'informations de mesure de l'intensité du signal de la première cellule, la qualité du signal de la première cellule, le taux d'erreur binaire de bloc du PDCCH ou le taux d'erreur binaire de bloc du PDSCH ne satisfait pas au seuil prédéfini, correspondant à au moins l'un des éléments d'informations de mesure, que la raison de descente KPI est au moins l'une parmi : la faible intensité du signal de la première cellule, la mauvaise qualité du signal de la première cellule, le taux d'erreur binaire de bloc du PDCCH élevé ou le taux d'erreur binaire de bloc du PDSCH élevé.

7. Système pour déterminer une raison de descente d'un indicateur de performances clés, KPI, le système comprenant une première station de base, une deuxième station de base, un équipement utilisateur, UE, et un système de support d'opération, OSS, la première station de base (1), comprenant :
une unité de réception (10), configurée pour recevoir un message de service envoyé par l'UE, le message de service portant des premières informations de mesure, les premières informations de mesure étant des informations concernant une mesure de service réalisée par l'UE sur une première cellule, et la première cellule étant desservie par la première station de base ;
une unité d'obtention (11), configurée pour obtenir les premières informations de mesure en fonction du message de service reçu par l'unité de réception ;
une unité de génération (12), configurée pour générer des informations de mesure de test de réseau minimisé, MNT, en fonction des premières informations de mesure obtenues par l'unité d'obtention ; et
une unité d'envoi (13), configurée pour envoyer les informations de mesure MNT générées par l'unité de génération au système de support d'opération, OSS, les informations de mesure MNT étant utilisées par l'OSS pour déterminer une raison de descente d'un indicateur de performances clés, KPI, lorsque la première station de base détermine que l'UE est transféré de la première cellule vers une deuxième cellule, l'unité émettrice (13) étant configurée pour envoyer les informations de mesure MNT générées par l'unité de génération à la deuxième station de base, et la deuxième station de base étant configurée pour envoyer les informations de mesure MNT à l'OSS, la deuxième cellule étant desservie par la deuxième station de base ;
et le système de support d'opération, OSS (2) comprenant :
une unité de réception (20), configurée pour recevoir des informations de mesure de test de réseau minimisé, MNT, envoyées par la première station de base, les informations de mesure MNT étant générées par la première station de base en fonction des premières informations de mesure après que la première station de base reçoit un message de service envoyé par l'équipement utilisateur UE et obtient les premières informations de mesure en fonction du message de service, le message de service portant les premières informations de mesure, les premières informations de mesure étant des informations sur une mesure de service réalisée par l'UE dans une première cellule et la première cellule étant desservie par la première station de base ; et
une unité de détermination (21), configurée pour déterminer une raison de descente d'un indicateur de performances clés, KPI, en fonction des informations de mesure MNT reçues par l'unité de réception,
l'unité de réception (20) étant spécifiquement configurée pour : lorsque l'unité de détermination détermine que l'UE est transféré de la première cellule à une deuxième cellule, recevoir les informations de mesure MNT envoyées par la deuxième station de base, les informations de mesure MNT étant envoyées par la première station de base à la deuxième station de base, et la deuxième cellule étant desservie par la deuxième station de base.

8. Système selon la revendication 7, l'OSS comprenant en outre une unité d'obtention (23),
l'unité d'obtention (23) étant configurée pour : lorsque l'unité de détermination (21) détermine que l'UE est transféré de la première cellule à la deuxième cellule, et ne parvient pas à déterminer la raison de descente KPI en fonction des informations de mesure MNT reçues par l'unité de réception (20), obtenir un identifiant pour la deuxième station de base : et
l'unité de détermination (21) étant en outre configurée pour déterminer un identifiant de la deuxième cellule en fonction de l'identifiant de la deuxième station de base obtenu par l'unité d'obtention ; et déterminer, en fonction de l'identifiant de la première cellule et de l'identifiant de la deuxième cellule, si la raison de descente KPI est un défaut de gestion de cellule de voisinage.

9. Système selon l'une quelconque des revendications 7 à 8, l'OSS comprenant en outre une unité de comparaison (24),
l'unité de comparaison (24) étant configurée pour comparer chaque élément d'informations de mesure dans les informations de mesure MNT reçues par l'unité de réception (20) avec un seuil prédéfini correspondant à l'élément d'informations de mesure ; et
l'unité de détermination (21) étant configurée spécifiquement pour déterminer la raison de descente KPI en fonction d'un résultat de comparaison, obtenu au moyen d'une comparaison par l'unité de comparaison (24), entre chaque élément d'informations de mesure et le seuil prédéfini.

10. Système selon la revendication 9,
l'unité de détermination (21) étant en outre configurée spécifiquement pour : s'il est obtenu par comparaison par l'unité de comparaison (24) qu'au moins un élément d'informations de mesure dans tous les éléments d'informations de mesure ne satisfait pas au seuil prédéfini correspondant à l'au moins un élément d'informations de mesure, déterminer que la raison de descente KPI est l'au moins un élément d'informations de mesure.

11. Système selon la revendication 10, les informations de mesure MNT reçues par l'unité de réception (20) comprenant au moins un élément d'informations de mesure de l'intensité du signal de la première cellule, de la qualité du signal de la première cellule, d'un taux d'erreur binaire de bloc d'un canal de commande physique en liaison descendante, PDCCH, ou d'un taux d'erreur binaire de bloc d'un canal partagé physique en liaison descendante, PDSCH,
l'unité de détermination (21) étant en outre configurée spécifiquement pour : s'il est obtenu au moyen d'une comparaison par l'unité de comparaison qu'au moins un élément d'informations de mesure de l'intensité du signal de la première cellule, de la qualité du signal de la première cellule, du taux d'erreur binaire de bloc du PDCCH ou du taux d'erreur binaire de bloc du PDSCH ne satisfait pas au seuil prédéfini correspondant au moins un élément d'informations de mesure, déterminer que la raison de descente KPI est au moins l'une parmi : la faible intensité du signal de la première cellule, la mauvaise qualité du signal de la première cellule, le taux d'erreur binaire de bloc du PDCCH élevé ou le taux d'erreur binaire de bloc du PDSCH élevé.
